# EUROPÄISCHE PATENTSCHRIFT

(11) **EP 3 752 385 B1**
(45) Veröffentlichungstag und Bekanntmachung des Hinweises auf die Patenterteilung: **15.04.2026**
(21) Anmeldenummer: 19710292.4
(22) Anmeldetag: 21.02.2019
(51) Int. Cl.: H02J 7/00, B60L 53/14, B60L 53/16, B60L 53/30, B60L 53/60, B60L 53/66

(54) **EINSTELLEN EINES KOMMUNIKATIONSPARAMETERS EINES KOMMUNIKATIONSMODULS EINER LADESTATION**
SETTING A COMMUNICATION PARAMETER OF A COMMUNICATION MODULE OF A CHARGING STATION
PARAMÉTRAGE DE UN PARAMÈTRE DE COMMUNICATION D'UN MODULE DE COMMUNICATION D'UNE STATION DE CHARGE

(30) Priorität: 26.03.2018 DE 102018204565
(43) Veröffentlichungstag der Anmeldung: 23.12.2020
(73) Patentinhaber: Siemens Aktiengesellschaft, 80333 München (DE)
(72) Erfinder: BODE, Sebastian, 81379 München (DE); KRENZ, Albert, 71263 Weil der Stadt (DE); LINZMAIER, Klaus-Peter, 73650 Winterbach (DE)
(74) Vertreter: Siemens Patent Attorneys
(86) Internationale Anmeldenummer: PCT/EP2019/054275
(87) Internationale Veröffentlichungsnummer: WO 2019/185247

(56) Entgegenhaltungen:
- EP-A1- 2 958 345
- EP-A1- 2 958 345
- DE-A1- 102011 010 809
- DE-A1- 102011 010 809
- DE-A1- 102011 056 501
- DE-A1- 102011 056 501
- JP-A- 2013 046 477
- JP-A- 2013 046 477
- JP-A- 2013 247 688
- JP-A- 2013 247 688
- JP-B2- 6 172 057
- JP-B2- 6 172 057
- JP-B2- 6 172 057
- US-A1- 2013 317 979
- US-B1- 8 515 865
- ZHOU WENWEN ET AL: "An Integrated Digital Ripple Restrained System for DC Charging Infrastructure Testing", 2017 IEEE VEHICLE POWER AND PROPULSION CONFERENCE (VPPC), IEEE, 11 December 2017 (2017-12-11), pages 1 - 5, XP033344266, [retrieved on 20180403], DOI: 10.1109/VPPC.2017.8330954
- "Pilot function through a control pilot circuit using PWM (pulse width modulation) and a control pilot wire", IEC TS 62763:2013, IEC, 3, RUE DE VAREMB�, PO BOX 131, CH-1211 GENEVA 20, SWITZERLAND, 10 December 2013 (2013-12-10), pages 1 - 32, XP082010588, [retrieved on 20131210]
- "ISO 15118-3 Road vehicles -- Vehicle to grid communication interface -- Part 3: Physical and data link layer requirements", ISO 15118-3:2015, IEC, 3, RUE DE VAREMB�, PO BOX 131, CH-1211 GENEVA 20, SWITZERLAND, vol. 15118-3, 26 May 2015 (2015-05-26), pages 1 - 79, XP082006252, [retrieved on 20150526]

## Beschreibung

Die Erfindung betrifft Verfahren zum Einstellen von wenigstens einem Kommunikationsparameter eines Kommunikationsmoduls einer Ladestation, das zum, insbesondere leitungsgebundenen, Kommunizieren über eine Schnittstelle der Ladestation dient. Darüber hinaus betrifft die Erfindung auch Kalibriergeräte zum Einstellen von wenigstens einem Kommunikationsparameter eines Kommunikationsmoduls einer Ladestation, das zum, insbesondere leitungsgebundenen, Kommunizieren über eine Schnittstelle der Ladestation dient. Weiterhin betrifft die Erfindung Kommunikationsmodule für eine Ladestation, wobei das Kommunikationsmodul zum, insbesondere leitungsgebundenen, Kommunizieren über eine Schnittstelle der Ladestation dient. Schließlich betrifft die Erfindung auch eine Ladestation mit einem Ladeanschluss zum Bereitstellen von elektrischer Energie, einem mittels einer Steuereinheit steuerbaren und mit dem Ladeanschluss elektrisch gekoppelten Energiewandler sowie ein mit der Steuereinheit kommunikationstechnisch gekoppeltes Kommunikationsmodul, das zum, insbesondere leitungsgebundenen, Kommunizieren über eine Schnittstelle der Ladestation unter Nutzung wenigstens eines Kommunikationsparameters dient.

Ladestationen, Kommunikationsmodule sowie auch Kalibriergeräte sind im Stand der Technik umfänglich bekannt, sodass es eines gesonderten druckschriftlichen Nachweises hierfür nicht bedarf. Ladestationen dienen insbesondere dazu, elektrische Einrichtungen, die einen elektrischen Energiespeicher für ihren bestimmungsgemäßen Betrieb aufweisen, zumindest zeitweise mit elektrischer Energie versorgen zu können, damit deren elektrischer Energiespeicher aufgeladen werden kann. Dies betrifft nicht nur, aber insbesondere elektrisch antreibbare Kraftfahrzeuge.

Ein elektrisch antreibbares Kraftfahrzeug ist ein Kraftfahrzeug, das eine elektrische Antriebseinrichtung für seinen bestimmungsgemäßen Fahrbetrieb aufweist. Umfasst das Kraftfahrzeug ausschließlich die elektrische Antriebseinrichtung als Antriebseinrichtung, handelt es sich hierbei um ein Elektrofahrzeug. Ist stattdessen ergänzend eine weitere Antriebseinrichtung vorgesehen, beispielsweise eine Verbrennungskraftmaschine oder dergleichen, handelt es sich bei dem elektrisch antreibbaren Kraftfahrzeug um ein Hybridfahrzeug.

Während des bestimmungsgemäßen Betriebs der elektrischen Einrichtungen, insbesondere der elektrisch antreibbaren Kraftfahrzeuge, wird elektrische Energie verbraucht, die durch einen jeweiligen elektrischen Energiespeicher der elektrischen Einrichtung beziehungsweise des elektrisch antreibbaren Kraftfahrzeugs bereitgestellt wird. Der elektrische Energiespeicher ist deshalb in der Regel als Akkumulator ausgebildet.

Insbesondere bei elektrisch antreibbaren Kraftfahrzeugen ist der Akkumulator häufig als eine Hochvoltbatterie ausgebildet. Elektrisch antreibbare Kraftfahrzeuge sind deshalb ebenso wie auch andere elektrische Einrichtungen der gattungsgemäßen Art regelmäßig mit einer Ladestation elektrisch zu koppeln, sodass dem jeweiligen elektrischen Energiespeicher elektrische Energie zugeführt werden kann, um nach Beendigung der energietechnischen Kopplung mit der Ladestation den bestimmungsgemäßen Betrieb fortführen zu können.

Ladestationen sind in der Regel stationär beziehungsweise ortsfest angeordnete Einrichtungen, die dazu ausgebildet sind, mit den elektrischen Einrichtungen, insbesondere den elektrisch antreibbaren Kraftfahrzeugen, energietechnisch gekoppelt zu werden. Die energietechnische Kopplung kann beispielsweise als leitungsgebundene energietechnische Kopplung ausgebildet sein, indem zum Beispiel ein Ladekabel der Ladestation mit der elektrischen Einrichtung beziehungsweise dem elektrisch antreibbaren Kraftfahrzeug elektromechanisch gekoppelt wird. Darüber hinaus ist es natürlich auch möglich, eine drahtlose energietechnische Kopplung, beispielsweise unter Nutzung eines magnetischen Wechselfeldes oder dergleichen, bereitzustellen.

Für den bestimmungsgemäßen Betrieb der Ladestation ist es in der Regel erforderlich, eine Kommunikation zwischen der Ladestation und der elektrischen Einrichtung beziehungsweise dem Kraftfahrzeug zu ermöglichen. Hierdurch kann der Ladevorgang in gewünschter Weise gesteuert werden. Die Kommunikation findet in der Regel über eine entsprechende Kommunikationsleitung statt. Diese kann insbesondere bei einer leitungsgebundenen energietechnischen Kopplung in das die leitungsgebundene energietechnische Kopplung bereitstellende Ladekabel der Ladestation integriert sein. Die Kommunikation kann aber gelegentlich auch drahtlos beispielsweise unter Nutzung von Nahfunk, Infrarot, Ultraschall und/oder dergleichen realisiert sein. In diesem Zusammenhang offenbart die EP 2 958 345 A1 einen dämpfungspegelbasierten Zusammenschluss in Kommunikationsnetzwerken. Ferner offenbart die DE 10 2011 010 809 A1 eine Ladestation und ein Verfahren zur Sicherung eines Ladevorgangs eines Elektrofahrzeugs.

Aus einer Maschinenübersetzung der JP6172057B2 ist ein Ladesystem bekannt, dem die Aufgabe zugrunde liegt, einen Wechsel der Ladeart zur Auswahl von Wechselstromladung oder Gleichstrom-Schnellladung bei stabiler PLC-Kommunikation (Powerline Communication) zu ermöglichen. Das Ladesystem umfasst hierzu eine im Fahrzeug vorgesehene Ladesteuereinheit zum Senden und Empfangen eines Steuersignals und zum Steuern des Ladens über eine im Ladekabel vorgesehene Steuerleitung und eine im Fahrzeug vorgesehene und über eine mit der Stromversorgungssteuereinheit verbundene Steuereinheit. Ein jeweiliges PLC-Modem umfasst eine Amplitudeneinstellungseinheit zum Erhöhen der Amplitude des Kommunikationssignals, um die PLC-Kommunikation während einer Gleichstrom-Schnellladung gegenüber einer Wechselstromladens zu verbessern.

Aus der US 2013/0317979 A1 ist ein Verfahren bekannt, welches nach Herstellen einer anfänglichen Kommunikation zwischen einem Fahrzeug und einer Ladestation, ein Festlegen einer erwarteten Spannung zum Laden einer Batterie im Fahrzeug während der anfänglichen Kommunikation vorsieht. Danach wird die Phase der anfänglichen Kommunikation zwischen dem Fahrzeug und der Ladestation beendet. Es folgt ein Empfang einer von der Ladestation gelieferten elektrischen Energie am Fahrzeug sowie ein Vergleichen der im Zuge der elektrischen Energie tatsächlich angelegten elektrischen Spannung mit der erwarteten - d.h. während der anfänglichen Kommunikation festgelegten - Spannung. Bei Übereinstimmung zwischen der tatsächlichen und der erwarteten Spannung erfolgt eine Freigabe bzw. Autorisierung des Ladevorgangs.

Aus "ZHOU WENWEN ET AL: An Integrated Digital Ripple Restrained System for DC Charging Infrastructure Testing" ist ein Testgerät für DC-Ladestationen bekannt, das an eine Ladestation angeschlossen werden kann und charakteristische Größen der Ladestation erfassen kann.

Um eine zuverlässige Kommunikation erreichen zu können, sieht die Ladestation das Kommunikationsmodul vor, welches es ermöglicht, unter Nutzung von wenigstens einem Kommunikationsparameter die gewünschte Kommunikation so einzustellen, dass eine zuverlässige Kommunikation zumindest während eines Ladebetriebs gewährleistet werden kann. Da die Kommunikation jedoch von einer Reihe von Umweltparametern abhängig sein kann, zum Beispiel auch einem Aufstellort der Ladestation, einer Länge des Ladekabels, aber auch Eigenschaften des an das Ladekabel angeschlossenen Kraftfahrzeugs und/oder dergleichen, reicht es in der Regel nicht aus, den wenigstens einen Kommunikationsparameter bei der Herstellung der Ladestation beziehungsweise des Kommunikationsmoduls für die Ladestation auf einen vorbestimmten Wert zu kalibrieren, weil die Funktionalität in Bezug auf die Kommunikation unter anderem auch von einer Einbauposition des Kommunikationsmoduls in der Ladestation, einer Art und einer Länge des Ladekabels beziehungsweise der Kommunikationsschnittstelle sowie auch einer Impedanz einer Erdverbindung und/oder dergleichen abhängig sein kann. Es ist deshalb in der Regel vorgesehen, dass das Kommunikationsmodul hinsichtlich des wenigstens einen Kommunikationsparameters einstellbar ausgebildet ist.

Im Stand der Technik sind für das Einstellen des wenigstens einen Kommunikationsparameters zwei unterschiedliche Methoden bekannt. Eine erste Methode, auch Bauartkalibrierung genannt, sieht vor, dass eine Kalibrierung pro Bauart einmalig durchgeführt wird und alle Ladestationen derselben Bauart bezüglich ihrer wenigstens einen Kommunikationsparameter auf den gleichen Wert eingestellt werden. Solange Toleranzen, insbesondere in Bezug auf eine Mechanik, eine Länge von in der Ladestation installierten Leitungen, insbesondere Erdleitungen und des Ladekabels, hierbei gering sind, kann hierdurch eine hinreichend brauchbare Kalibrierung über die Baureihe hinweg erreicht werden.

Eine zweite Methode, auch Stückkalibrierung genannt, sieht vor, dass die Kalibrierung individuell für eine jeweilige Ladestation durchgeführt wird, wodurch Toleranzen oder sogar auch Unterschiede bei einer Nutzung unterschiedlicher Komponenten einfach berücksichtigt werden können. Bei der Stückkalibrierung überwiegen logistische Vorteile. Jedoch kann Stückkalibrierung nicht mit herkömmlichen Kalibriermitteln erfolgen, bei denen Werte für den wenigstens einen Kommunikationsparameter zum Beispiel in ein Rechnerprogramm der Ladestation integriert werden müssen. Vielmehr ist es erforderlich, dass der wenigstens eine Kommunikationsparameter auf einfache Weise und mit großer Zuverlässigkeit durch Montagebeziehungsweise Wartungspersonal entweder bei der Fertigung der Ladestation oder auch nach der Fertigung der Ladestation eingestellt werden kann. Dies soll auch bei einer Wartung der Ladestation, wenn sie im bestimmungsgemäßen Betrieb genutzt wird, möglich sein.

Der Erfindung liegt die Aufgabe zugrunde, ein möglichst einfaches Einstellen des wenigstens einen Kommunikationsparameters bei großer Zuverlässigkeit und großer Sicherheit zu ermöglichen.

Die Erfindung schlägt zur Lösung der Aufgabe Verfahren, Kalibriergeräte, Kommunikationsmodule sowie eine Ladestation gemäß den unabhängigen Ansprüchen vor.

Vorteilhafte Weiterbildungen ergeben sich durch Merkmale der abhängigen Ansprüche.

Bezüglich eines gattungsgemäßen Verfahrens wird gemäß einem ersten Aspekt insbesondere vorgeschlagen, dass ein Kalibriergerät mit der Schnittstelle gekoppelt wird, Authentifizierungsdaten von dem Kalibriergerät an das Kommunikationsmodul übermittelt werden, ein Wert für den wenigstens einen Kommunikationsparameter von dem Kalibriergerät an das Kommunikationsmodul übermittelt wird, und der wenigstens eine Kommunikationsparameter vom Kommunikationsmodul abhängig von einem Auswerten der Authentifizierungsdaten durch das Kommunikationsmodul entsprechend dem übermittelten Wert eingestellt wird.

Gemäß einem zweiten Aspekt wird für ein gattungsgemäßes Verfahren insbesondere vorgeschlagen, dass ein Kalibriergerät mit der Schnittstelle gekoppelt wird, Authentifizierungsdaten von dem Kalibriergerät an das Kommunikationsmodul übermittelt werden, ein Kommunikationssignal des Kommunikationsmoduls vom Kalibriergerät empfangen und ausgewertet wird, um abhängig von dem empfangenen Kommunikationssignal wenigstens einen Signalparameter zu ermitteln, der wenigstens eine Signalparameter vom Kalibriergerät an das Kommunikationsmodul übermittelt wird, und das Kommunikationsmodul den wenigstens einen Kommunikationsparameter abhängig von dem wenigstens einen Signalparameter und einem Auswerten der Authentifizierungsdaten einstellt.

Bezüglich eines gattungsgemäßen Kalibriergeräts wird gemäß dem ersten Aspekt insbesondere vorgeschlagen, dass das Kalibriergerät ausgebildet ist, mit der Schnittstelle gekoppelt zu werden, Authentifizierungsdaten an das Kommunikationsmodul zu übermitteln, und einen Wert für den wenigstens einen Kommunikationsparameter an das Kommunikationsmodul zu übermitteln, damit das Kommunikationsmodul den wenigstens einen Kommunikationsparameter abhängig von dem übermittelten Wert und einem Auswerten der Authentifizierungsdaten durch das Kommunikationsmodul einstellt.

Bezüglich des zweiten Aspekts wird für ein gattungsgemäßes Kalibriergerät insbesondere vorgeschlagen, dass das Kalibriergerät ausgebildet ist, mit der Schnittstelle gekoppelt zu werden, Authentifizierungsdaten an das Kommunikationsmodul zu übermitteln, ein Kommunikationssignal des Kommunikationsmoduls zu empfangen und auszuwerten, um abhängig von dem empfangenen Kommunikationssignal wenigstens einen Signalparameter zu ermitteln, und den wenigstens einen Signalparameter an das Kommunikationsmodul zu übermitteln, damit das Kommunikationsmodul den wenigstens einen Kommunikationsparameter abhängig von dem wenigstens einen Signalparameter und einem Auswerten der Authentifizierungsdaten einstellt.

Bezüglich eines gattungsgemäßen Kommunikationsmoduls wird gemäß dem ersten Aspekt insbesondere vorgeschlagen, dass das Kommunikationsmodul zum Einstellen von wenigstens einem Kommunikationsparameter ausgebildet ist, Authentifizierungsdaten eines mit der Schnittstelle koppelbaren Kalibriergeräts zu empfangen, einen Wert für den wenigstens einen Kommunikationsparameter von dem Kalibriergerät zu empfangen und den wenigstens einen Kommunikationsparameter abhängig von einem Auswerten der Authentifizierungsdaten entsprechend dem empfangenen Wert einzustellen.

Bezüglich eines gattungsgemäßen Kommunikationsmoduls wird gemäß dem zweiten Aspekt insbesondere vorgeschlagen, dass das Kommunikationsmodul zum Einstellen von wenigstens einem Kommunikationsparameter ausgebildet ist, Authentifizierungsdaten eines mit der Schnittstelle koppelbaren Kalibriergeräts zu empfangen, ein Kommunikationssignal auszusenden, damit das Kalibriergerät das Kommunikationssignal empfängt und auswertet, um abhängig von dem empfangenen Kommunikationssignal wenigstens einen Signalparameter zu ermitteln, den wenigstens einen Signalparameter vom Kalibriergerät zu empfangen und den wenigstens einen Kommunikationsparameter abhängig von dem wenigstens einen Signalparameter und einem Auswerten der Authentifizierungsdaten einzustellen.

Schließlich wird für eine gattungsgemäße Ladestation insbesondere vorgeschlagen, dass das Kommunikationsmodul gemäß der Erfindung ausgebildet ist.

Die Erfindung basiert auf dem Gedanken, dass der wenigstens eine Kommunikationsparameter auf einfache Weise mittels des Kalibriergeräts eingestellt werden kann. Zu diesem Zweck soll das Kalibriergerät über die Schnittstelle der Ladestation mit dem Kommunikationsmodul in Kommunikationsverbindung gebracht werden, sodass das Kommunikationsmodul einen Wert für den wenigstens einen einzustellenden Kommunikationsparameter erhalten kann. Damit nicht jedes beliebige Kalibriergerät genutzt werden kann, um den Wert des Kommunikationsparameters einzustellen und damit auf die Funktion der Ladestation einwirken zu können, sieht die Erfindung die Authentifizierungsdaten vor. Durch die Authentifizierungsdaten kann sichergestellt werden, dass nur Kalibriergeräte zum Einstellen des wenigstens einen Kommunikationsparameters genutzt werden können, für die eine vorgegebene Berechtigung vorliegt. Zu diesem Zweck kann ein geeignetes Authentifizierungsverfahren genutzt werden.

Es ist also gemäß der Erfindung nicht erforderlich, die Ladestation über eine dauerhafte Kommunikationsverbindung mit einer Zentrale zu verbinden, um den wenigstens einen Kommunikationsparameter einstellen zu können. Dies erweist sich insbesondere dann als vorteilhaft, wenn die Ladestation abseits von einem Kommunikationsnetzwerk angeordnet ist und eine entsprechende Kommunikationsverbindung einen erhöhten Aufwand benötigt oder sogar nicht realisiert werden kann.

Darüber hinaus kann durch die Erfindung auch ein unberechtigter Zugriff über ein Kommunikationsnetzwerk auf die Ladestation vermieden werden, weil eine permanente Kommunikationsverbindung nicht vorzuliegen braucht. Vielmehr sieht die Erfindung vor, dass hierfür das Kalibriergerät genutzt wird.

Das Kalibriergerät ist vorzugsweise eine tragbare Einheit, die zur Ladestation transportiert werden kann, um sie mit der Ladestation über deren Schnittstelle in Kommunikationsverbindung zu bringen. Dadurch eignet sich die Erfindung natürlich insbesondere für den Fall, dass die Ladestation bereits an ihrem bestimmungsgemäßen Ort aufgestellt ist. Dem Grunde nach kann die Erfindung jedoch auch für eine Fertigung der Ladestationen beziehungsweise des Kommunikationsmoduls vorgesehen sein. In diesem Fall braucht das Kalibriergerät natürlich nicht zu der Ladestation beziehungsweise dem Kommunikationsmodul transportiert zu werden. Gleichwohl kann das Kalibriergerät insgesamt eine kompakte, leicht handhabbare, insbesondere tragbare Einheit sein, die eine geeignete Geräteschnittstelle aufweisen kann, die mit der Schnittstelle der Ladestation in Kommunikationsverbindung gebracht werden kann.

Die Schnittstelle kann zum Beispiel durch eine Steckverbindung oder dergleichen gebildet sein, mittels der eine leitungsgebundene Kommunikationsverbindung hergestellt werden kann. Darüber hinaus kann natürlich auch vorgesehen sein, dass die Schnittstelle als leitungsgebundene Kommunikationsverbindung über Leitungen des Ladekabels der Ladestation realisiert werden kann. In diesem Fall kann die Schnittstelle an die Leitungen des Ladekabels angepasst ausgebildet sein.

Das Einstellen des wenigstens einen Kommunikationsparameters braucht nicht das Ändern eines Rechnerprogramms oder einer Hardware der Ladestation zu umfassen. Insbesondere kann vorgesehen sein, dass lediglich ein Wert für den wenigstens einen Kommunikationsparameter in einer Speichereinheit des Kommunikationsmoduls beziehungsweise der Ladestation gespeichert ist, der entsprechend eingestellt wird. Auf ein etwaiges Rechnerprogramm sowie auch auf etwaige weitere Hardware des Kommunikationsmoduls beziehungsweise der Ladestation braucht deshalb nicht zugegriffen zu werden. Dadurch kann eine besonders einfache Realisierung der Erfindung erreicht werden.

Der wenigstens eine Kommunikationsparameter kann zum Beispiel ein Träger bei drahtlosen Kommunikationsverfahren wie Nahfunk, Infrarot, Ultraschall und/oder dergleichen oder bei einem Trägerfrequenzverfahren, insbesondere in Bezug auf eine leitungsgebundene Kommunikation, sein, der für die Kommunikation genutzt werden soll. Darüber hinaus kann der wenigstens eine Kommunikationsparameter natürlich auch eine Sendeleistung, insbesondere eine Amplitude und/oder dergleichen, umfassen. Ferner kann der Kommunikationsparameter auch eine etwaige Codierung betreffen, die für die Kommunikation genutzt werden soll. So ist es möglich, die Codierung in geeigneter Weise bedarfsgerecht einstellen zu können, sodass die Zuverlässigkeit der Kommunikation, aber auch eine Sicherheit der Kommunikation, eingestellt werden können. Beispielsweise kann der Kommunikationsparameter auch eine Frequenz betreffen, die zur Nutzung der Kommunikation ausgewählt werden soll. Natürlich können auch mehrere Träger und/oder Frequenzen mit einem Kommunikationsparameter eingestellt beziehungsweise ausgewählt werden. Auch weitere Kombinationen, die dem Einstellen der Kommunikation dienen können, können von dem wenigstens einen Kommunikationsparameter erfasst sein.

Das Kommunikationsmodul ist eine, insbesondere elektronische, Einheit, die dazu dient, eine Kommunikation zumindest mit dem Kalibriergerät zu ermöglichen. Das Kommunikationsmodul ist vorzugsweise Bestandteil der Ladestation und kann zum Beispiel in einem Gehäuse der Ladestation angeordnet sein. Alternativ oder ergänzend kann das Kommunikationsmodul aber auch zumindest teilweise separat von der Ladestation angeordnet sein.

Darüber hinaus kann natürlich vorgesehen sein, dass das Kommunikationsmodul auch dazu genutzt werden kann, dass eine Ladestation mit einem an die Ladestation angeschlossenen Kraftfahrzeug kommunizieren kann. Die Kommunikation kann vorzugsweise über das Ladekabel erfolgen. Dabei besteht die Möglichkeit, dass die Kommunikation über wenigstens zwei elektrische Leitungen des Ladekabels erfolgen kann. Darüber hinaus kann sie natürlich auch unter Nutzung einer Pilotleitung ermöglicht sein, die häufig vom Ladekabel umfasst ist. Natürlich können auch Kombinationen hiervon vorgesehen sein.

Die Schnittstelle der Ladestation kann somit in der Regel eine Schnittstelle für eine leitungsgebundene Kommunikation sein, die entweder eine eigene Hardwareschnittstelle sein kann oder auch mit anderen Einheiten der Ladestation, zum Beispiel einem Ladecontroller oder dergleichen, kombiniert sein kann. Das Kommunikationsmodul braucht deshalb nicht ausschließlich für die Kommunikation mit dem Kalibriergerät ausgebildet zu sein.

Um die leitungsgebundene Kommunikation zwischen dem Kommunikationsmodul und dem Kalibriergerät zu ermöglichen, ist vorgesehen, dass das Kalibriergerät mit der Schnittstelle gekoppelt wird. Die Kopplung kann vorzugsweise elektromechanisch erfolgen, beispielsweise über eine Steckverbindung oder dergleichen. Natürlich kann auch eine drahtlose Kopplung, beispielsweise basierend auf Nahfunk in einem Nahbereich und/oder dergleichen, vorgesehen sein, sodass Störungen aufgrund von ungünstigen Kontaktübergangswiderständen und/oder dergleichen vermieden werden können. Der Nahbereich meint in diesem Zusammenhang einen Bereich von einem oder mehreren cm bis hin zu einer Kommunikationsreichweite von etwa 5 m.

Besonders vorteilhaft erweist es sich jedoch, wenn das Kalibriergerät als Steckverbinder ausgebildet ist, der mit einem entsprechend komplementär ausgebildeten Steckverbinder des Ladekabels, welches dem Anschließen an ein Kraftfahrzeug dient, elektromechanisch lösbar verbunden werden kann. Dadurch kann nämlich die Schnittstelle in das Ladekabel integriert sein, und es braucht somit keine separate Schnittstelle an der Ladestation vorgesehen zu sein.

Damit die Ladestation, insbesondere das Kommunikationsmodul, weiß, dass ausgetauschte Daten aus einer zuverlässigen Quelle stammen und für die weitere Nutzung freigegeben sind, ist es vorgesehen, dass das Kalibriergerät nach einem Koppeln mit der Schnittstelle Authentifizierungsdaten an das Kommunikationsmodul übermittelt. Anhand der Authentifizierungsdaten kann das Kommunikationsmodul ermitteln, ob das Kalibriergerät für das Einstellen des wenigstens einen Kommunikationsparameters zugelassen ist, also eine gültige Berechtigung hierfür aufweist. Dadurch kann vermieden werden, dass durch unberechtigte Dritte Manipulationen bezüglich des wenigstens einen Kommunikationsparameters vorgenommen werden und somit die bestimmungsgemäße Funktionalität der Ladestation beeinträchtigt sein kann.

Das Kommunikationsmodul kann zum Beispiel einstückig mit einer Steuereinheit der Ladestation ausgebildet sein. Die Steuereinheit kann dazu dienen, die vorgegebene Ladefunktionalität der Ladestation bereitzustellen, indem zum Beispiel ein Ladecontroller und/oder dergleichen entsprechend gesteuert wird.

Um das Authentifizieren realisieren zu können, kann vorgesehen sein, dass eine spezielle Funktionalität, die im Kommunikationsmodul beziehungsweise der Steuereinheit zur Verfügung gestellt wird und von einer zentralen vertrauenswürdigen Stelle signiert ist, auch ein Berechtigungsmodul umfasst, welches eine oder mehrere Regeln eines Regelsatzes umfasst, durch welche Instanzen bestimmt sein können, durch welche der wenigstens eine Kommunikationsparameter manipuliert beziehungsweise eingestellt werden darf. Die Funktionalität kann zum Beispiel durch eine elektronische Hardwareschaltung, aber auch durch ein auf einer Rechnereinheit ablaufendes Rechnerprogramm sowie Kombinationen hiervon bereitgestellt werden. Beispielsweise kann die Ladestation beziehungsweise die Steuereinheit oder auch das Kommunikationsmodul, hierfür ein geeignetes Rechnerprogramm umfassen, welches unter anderem auch einen Paketmanager aufweist. Soll beispielsweise eine bereits in Betrieb genommene Ladestation vor Ort hinsichtlich der Funktionalität der Schnittstelle eingestellt werden, zum Beispiel bei einer Powerline-Kommunikationsverbindung eine Einstellung von Dämpfungswerten für bestimmte Träger oder dergleichen, kann ein bestimmtes Servicepersonal ein geeignet ausgerüstetes Kalibriergerät an den Ort der Ladestation bringen und das Kalibriergerät an die Schnittstelle der Ladestation anschließen. Dabei kann zum Beispiel als bekannt angenommen werden, dass minimale und maximale Werte für den wenigstens einen einzustellenden Kommunikationsparameter zum Beispiel aus anderen Ladestationen des gleichen Typs bekannt sein können, beispielsweise Dämpfungswerte oder dergleichen.

Um das Einstellen ausführen zu können, kann vorgesehen sein, dass zum Beispiel automatisch entsprechende Daten, beispielsweise als Datei oder dergleichen, generiert und signiert werden und dann auf dem Kalibriergerät gespeichert werden. Das Kalibriergerät kann dann diese Daten entsprechend bereitstellen. Die Daten enthalten dabei vorzugsweise kein Rechnerprogramm, welches der Steuerung der Ladestation und/oder der Kommunikationsmoduls dient, sondern zum Beispiel ein Prüfmodul, Werte für den einzustellenden wenigstens einen Kommunikationsparameter und/oder dergleichen. Ist ein Prüfmodul vorhanden, kann dieses zum Beispiel als ein Skript realisiert sein, das im Rahmen der Paketinstallation aus einer durch das Kalibriergerät bereitgestellten und von diesem mittels Signatur kryptografisch gesicherten Datei Konfigurationsparameter, das heißt, Werte für den wenigstens einen einzustellenden Kommunikationsparameter, einliest, gegen in den Daten hinterlegte Plausibilitätsdaten prüft, die zum Beispiel aus den minimalen und maximalen Werten abgeleitet sein können, und bei erfolgreicher Prüfung übernimmt. Das Prüfmodul kann daher vorzugsweise dazu dienen, die Authentifizierung des wenigstens einen Kommunikationsparameters zu unterstützen oder zu ermöglichen oder dergleichen.

Im Rahmen einer Signaturprüfung der Datei kann das Skript zum Beispiel auch prüfen, ob das vom Kalibriergerät zur Signatur verwendete Zertifikat gültig ist und einen Zugriff durch dieses Kalibriergerät zu einem vorgegebenen Zeitpunkt oder dergleichen zulässig ist. Zu diesem Zweck kann die Datei zum Beispiel einen Hash-Wert, einen privaten Schlüssel des Kalibriergeräts, öffentliche Schlüssel, die zum Beispiel im Zertifikat enthalten sein können, und/oder dergleichen umfassen. Dadurch kann die Prüfung ermöglicht werden, und zwar ohne, dass das Kommunikationsmodul und das Kalibriergerät Online mit einem Kommunikationsnetzwerk in Kommunikationsverbindung stehen müssen. Diese Daten sind vorzugsweise in dem Prüfmodul, welches speziell für diese eine Ladestation generiert wurde, fest hinterlegt, sodass die Prüfung Offline erfolgen kann, indem nämlich lediglich das Kalibriergerät an die Schnittstelle der Ladestation angeschlossen wird. Das Prüfmodul kann aber auch generisch ausgeführt sein und beispielsweise nur die für die Identifikation und Autorisierung des Kalibriergeräts notwendigen Informationen beinhalten.

Ergibt die Prüfung, dass die Voraussetzungen nicht erfüllt sind, kann das Einstellen der Kommunikationsparameter abgebrochen werden. Für das Wertungspersonal kann dann die Möglichkeit bestehen, einen neuen Auftrag mit zum Beispiel erweiterten Rechten anzufordern. Hierzu kann es dann erforderlich sein, das Kalibriergerät mit neuen Daten, vorzugsweise mit erweiterten Rechten, auszurüsten, das heißt, zum Beispiel mit einem weniger eingeschränkten Prüfmodul oder dergleichen. Natürlich kann das Einstellen des wenigstens einen Kommunikationsparameters dabei auch von einem Vorhandensein von weiteren Berechtigungsnachweisen abhängig sein.

Der Gedanke dieser Ausgestaltung der Erfindung liegt insbesondere darin, unveränderliche, aber parametrierbare Funktionalitäten des Kommunikationsmoduls beziehungsweise der Steuereinheit gemeinsam mit einer Prüfeinrichtung ladestationsseitig bereitzustellen, sodass Konfigurationsmöglichkeiten mittels des Kalibriergeräts so weit eingeschränkt werden können, dass hohe Sicherheitsanforderungen eingehalten werden können. Dabei erweist es sich als vorteilhaft, wenn die Daten für das Kalibriergerät automatisch erstellt werden, wobei dann auch Daten bezüglich des Kalibriergeräts, mittels dem ein Auftrag bearbeitet werden soll, bei der Erstellung berücksichtigt werden. Hierdurch kann erreicht werden, dass auch bei Ladestationen, die keine Möglichkeit haben, Berechtigungen Online zu prüfen, eine Prüfung von Berechtigungen erreicht werden kann, ohne dass die Ladestation von sich aus für eine solche Art von Prüfung eingerichtet zu sein braucht.

Die Einbeziehung weiterer Berechtigungsnachweise kann zum Beispiel die Prüfung auf Szenarien erstrecken wie:
- Änderungen sind nur gemeinsam durch zwei Personen möglich,
- Änderungen sind abhängig davon, dass eine Quittung für eine vorherige erfolgreiche Übermittlung von Daten vorliegt,
- Änderungen sind nur in bestimmten Anlagenzuständen der Ladestation zulässig,
- Änderungen sind abhängig davon, dass ein bestimmter Zustand einer Funktionalität der Ladestation erreicht ist, zum Beispiel eine aktuelle Rechnerprogrammversion, wodurch Sicherheitslücken im Zusammenhang mit dem wenigstens einen Kommunikationsparameter geschlossen werden, und/oder dergleichen.

Das Einstellen des wenigstens einen Kommunikationsparameters kann zum Beispiel durch einen Paketmanager realisiert sein, der im Zuge der Installation im Paket enthaltene Skripte ausführt. Mindestens ein Skript kann das Prüfmodul umfassen. Der Paketmanager kann somit die Installation ausführen, damit auch das Skript ausgeführt werden kann. Damit kann mittels des Skripts auch das Überprüfen der wenigstens einen Regel des Regelsatzes sowie der weiteren Bedingungen realisiert werden.

Das Kalibriergerät kann eine separat tragbare Einheit sein, beispielsweise ein Laptop, ein PDA, aber auch lediglich eine elektronische Speichereinheit oder dergleichen. Vorzugsweise weist das Kalibriergerät ein Gehäuse auf, das eine zur Schnittstelle der Ladestation komplementäre Schnittstelle aufweist, sodass die bestimmungsgemäße lösbare Kommunikationsverbindung zwischen dem Kalibriergerät und der Ladestation beziehungsweise deren Schnittstelle hergestellt werden kann. Die Authentifizierungsdaten können zum Beispiel Daten sein, die in der Datei beziehungsweise Authentifizierungsdatei enthalten sein können. Ist die Authentifizierung erfolgreich durchgeführt, kann der wenigstens eine Kommunikationsparameter entsprechend eingestellt werden.

Gemäß dem ersten Aspekt kann vorgesehen sein, dass ein Wert für den wenigstens einen Kommunikationsparameter von dem Kalibriergerät an das Kommunikationsmodul übermittelt wird. Der Wert kann dann durch das Kommunikationsmodul und/oder die Steuereinheit entsprechend für den einzustellenden Kommunikationsparameter übernommen werden. Das Übermitteln des Werts für den wenigstens einen Kommunikationsparameter kann vor dem Authentifizieren oder nach dem Authentifizieren erfolgen. Im Grunde nach kann der Wert natürlich auch zusammen mit Authentifizierungsdaten übermittelt werden.

Der wenigstens eine Kommunikationsparameter wird dann vom Kommunikationsmodul abhängig von einem Auswerten der Authentifizierungsdaten durch das Kommunikationsmodul entsprechend dem ermittelten Wert eingestellt.

Gemäß einer Weiterbildung des ersten Aspekts wird vorgeschlagen, dass das Kalibriergerät ein Kommunikationssignal des Kommunikationsmoduls empfängt und den Wert für den wenigstens einen Kommunikationsparameter abhängig von dem empfangenen Kommunikationssignal ermittelt. Diese Ausgestaltung hat den Vorteil, dass die Funktionalität der Ladestation, insbesondere des Kommunikationsmoduls, bei der Ermittlung des Werts für den wenigstens einen Kommunikationsparameter in Betracht gezogen werden kann. Besonders vorteilhaft erweist sich dies, wenn die Schnittstelle zugleich durch das Ladekabel bereitgestellt wird und somit die Funktionalität in Bezug auf den Aufbau des Ladekabels und das Zusammenwirken mit dem Kommunikationsmodul berücksichtigt werden soll. Beispielsweise kann vorgesehen sein, dass der Wert für den wenigstens einen Kommunikationsparameter eine Dämpfung, eine Leistung, insbesondere eine Amplitude eines Trägers, aber auch eine Trägerfrequenz und/oder dergleichen betrifft. Darüber hinaus kann der Wert natürlich auch eine grundsätzliche Nutzung eines Trägers beziehungsweise einer Trägerfrequenz angeben, beispielsweise indem ein oder mehrere ausgewählte Träger ausschließlich für die Kommunikation genutzt werden sollen.

Grundsätzlich kann natürlich vorgesehen sein, dass bei mehreren Kommunikationsparametern auch entsprechend mehrere Werte übermittelt werden können. Natürlich kann für einen oder mehrere Kommunikationsparameter auch lediglich vorgesehen sein, dass ein einziger Wert übermittelt wird. Beispielsweise kann vorgesehen sein, dass Kommunikationsparameter gruppiert sind und ein Wert eine jeweilige Gruppe von Kommunikationsparametern betrifft. Dies kann zum Beispiel dafür realisiert sein, dass bestimmte vorgegebene Frequenzbereiche für die Kommunikation des Kommunikationsmoduls genutzt werden sollen. Die Frequenzbereiche brauchen nicht aneinander anzugrenzen, sondern können auch durch nicht genutzte Frequenzbereiche getrennt sein.

Es wird ferner vorgeschlagen, dass das Kommunikationssignal wenigstens ein Datentelegramm umfasst und der Wert anhand des wenigstens einen Datentelegramms ermittelt wird. Ein Datentelegramm ist beispielsweise ein Kommunikationselement mit Datenelementen, die zusammengefasst zu einer zu übermittelnden Einheit übermittelt werden. Das Datentelegramm basiert vorzugsweise auf digitalen Daten, die gemäß einer vorgegebenen Codierung und/oder Verschlüsselung bereitgestellt werden. Die Daten können dann als Dateneinheit übermittelt werden, beispielsweise unter Nutzung bestimmter Übermittlungsverfahren wie Blockcodierung oder dergleichen. Diese Weiterbildung nutzt die Eigenschaft, dass ein Datentelegramm eine vergleichsweise kurze Zeitspanne erfordert und die Kommunikationsbedingungen während des Übermittelns des Datentelegramms im Wesentlichen stationär sind. Wird als Kommunikationssignal das Datentelegramm genutzt, kann somit der Wert sehr genau ermittelt werden. Darüber hinaus besteht natürlich auch die Möglichkeit, eine Mehrzahl von Datentelegrammen, insbesondere unterschiedlichen Dateninhalts, für das Ermitteln des Werts zu nutzen, sodass das Ermitteln des Werts weiter verbessert werden kann. Zum Beispiel ist es möglich, zum Ermitteln des Werts auch statistische Verfahren ergänzend zu berücksichtigen, beispielsweise einen Mittelwert oder dergleichen.

Bezüglich des zweiten Aspekts wird das Kommunikationssignal des Kommunikationsmoduls vom Kalibriergerät empfangen und ausgewertet, um abhängig von dem empfangenen Kommunikationssignal wenigstens einen Signalparameter zu ermitteln. Der Signalparameter kann zum Beispiel eine Empfangsfeldstärke, eine Dämpfung, eine Empfangsleistung, eine Empfangsfrequenz und/oder dergleichen sein. Natürlich können auch mehrere Signalwerte von einem Signalparameter umfasst sein, wobei der Signalparameter kontinuierlich oder auch zeitdiskret, insbesondere zeitdiskret wiederholt, ermittelt werden kann.

Der wenigstens eine Signalparameter wird dann vom Kalibriergerät an das Kommunikationsmodul übermittelt, woraufhin dann das Kommunikationsmodul den wenigstens einen Kommunikationsparameter abhängig von dem wenigstens einen Signalparameter und einem Auswerten der Authentifizierungsdaten einstellt. Das Kommunikationsmodul prüft also, ob das Kalibriergerät, das an die Schnittstelle angeschlossen ist, berechtigt ist, Signalparameter an das Kommunikationsmodul zu übermitteln. Liegt die Berechtigung vor, wertet das Kommunikationsmodul den wenigstens einen Signalparameter aus und stellt den wenigstens einen Kommunikationsparameter abhängig hiervon ein.

Natürlich kann vorgesehen sein, dass zum Einstellen von einem einzigen Kommunikationsparameter mehrere Signalparameter genutzt werden. Darüber hinaus kann natürlich auch vorgesehen sein, dass bei mehreren Kommunikationsparametern für das Einstellen eines jeweiligen der Kommunikationsparameter ein oder mehrere Signalparameter vom Kalibriergerät ermittelt und an das Kommunikationsmodul übermittelt werden. Auch hier kann vorgesehen sein, dass ein Signalparameter dazu genutzt werden kann, zwei oder mehrere Kommunikationsparameter einzustellen. Auch hier können statistische Verfahren herangezogen werden, um das Einstellen zu verbessern.

Für den zweiten Aspekt wird ergänzend vorgeschlagen, dass das Kommunikationssignal wenigstens ein Datentelegramm umfasst und der Signalparameter anhand des wenigstens einen Datentelegramms ermittelt wird. Auch hier kann das zuvor bereits erläuterte Datentelegramm herangezogen werden, um den wenigstens einen Signalparameter zu ermitteln. Natürlich können anhand des Datentelegramms auch zwei oder mehr Signalparameter ermittelt werden. Ebenso können auch mehrere Datentelegramme zum Ermitteln eines jeweiligen Signalparameters genutzt werden.

Insgesamt wird ferner vorgeschlagen, dass der Wert und/oder ein Ändern des Werts des wenigstens einen Kommunikationsparameters an eine Zentrale übermittelt wird. Das Übermitteln kann ebenfalls mittels des Kalibriergeräts erfolgen. Zu diesem Zweck kann vorgesehen sein, dass das Kommunikationsmodul den eingestellten Wert an das Kalibriergerät übermittelt. Wird zu einem späteren Zeitpunkt das Kalibriergerät mit der Zentrale in Kommunikationsverbindung gebracht, kann der eingestellte Kommunikationsparameter vom Kalibriergerät an die Zentrale übermittelt werden. Diese Ausgestaltung hat den Vorteil, dass auch an der Zentrale die jeweilige Einstellung der Kommunikationsparameter der Ladestation verfügbar ist. Dies kann dazu dienen, voreingestellte Werte für die Herstellung von weiteren Ladestationen besser zu ermitteln. Darüber hinaus kann in einem Reparaturfall vorgesehen sein, dass zum Beispiel ein auszutauschendes Kommunikationsmodul bereits werksseitig mit den erforderlichen, aktuellen Kommunikationsparametern ausgerüstet wird, sodass vor Ort lediglich noch der mechanische Austausch des Kommunikationsmoduls an der Ladestation zu erfolgen braucht. Dadurch kann die Wartung beziehungsweise die Reparatur der Ladestation, insbesondere des Kommunikationsmoduls, weiter vereinfacht werden.

Gemäß einer Weiterbildung wird vorgeschlagen, dass das Einstellen des wenigstens einen Kommunikationsparameters automatisiert erfolgt, wenn das Kalibriergerät authentifiziert ist. Diese Ausgestaltung hat den Vorteil, dass keine weiteren Eingriffe, insbesondere vom Wartungspersonal, vorgenommen zu werden brauchen, um das Einstellen des wenigstens einen Kommunikationsparameters ausführen zu können. Es braucht lediglich die Kommunikationsverbindung zwischen dem Kommunikationsmodul und dem Kalibriergerät hergestellt zu werden.

Gemäß einer Weiterbildung wird vorgeschlagen, dass das Einstellen des wenigstens einen Kommunikationsparameters durch das Kalibriergerät überwacht wird. Hierdurch ist es möglich, die Funktionalität des Einstellens in Bezug auf das Kommunikationsmodul zu überprüfen. Dadurch kann sichergestellt werden, dass die gewünschte Einstellung des Kommunikationsmoduls auch tatsächlich erreicht worden ist. Die Zuverlässigkeit kann dadurch weiter verbessert werden. Ergibt die Überwachung, dass der Wert, auf den der wenigstens eine Kommunikationsparameter eingestellt werden soll, nicht erreicht worden ist beziehungsweise nicht erreicht werden kann, kann eine entsprechende Fehlermeldung ausgegeben und/oder gespeichert werden, und zwar beispielsweise im Kalibriergerät und/oder auch im Kommunikationsmodul beziehungsweise der Steuereinheit der Ladestation. Gegebenenfalls können dann weitere Wartungsmaßnahmen veranlasst werden. Das Überwachen kann vorzugsweise dadurch erfolgen, dass das Kommunikationsmodul nach dem Einstellen des Werts des einzustellenden wenigstens einen Kommunikationsparameters den aktuell eingestellten Wert an das Kalibriergerät übermittelt, das Kalibriergerät den vom Kommunikationsmodul übermittelten Wert mit dem an das Kommunikationsmodul zuvor übermittelten Wert vergleicht und abhängig von dem Vergleich eine Fehlermeldung oder auch eine Erfolgsmeldung abgibt. Darüber hinaus kann auch vorgesehen sein, den nun infolge des veränderten Kommunikationsparameters veränderten Signalparameter erneut zu bestimmen und gegebenenfalls den Kommunikationsparameter erneut anzupassen, wodurch eine Funktionsweise eines Regelkreises erreicht werden kann. Dadurch kann auch zumindest teilweise während des bestimmungsgemäßen Betriebs der Ladestation eine Anpassung an sich etwaig verändernde Randbedingungen erreicht werden. Diese Weiterbildung kann zum Beispiel in Betracht gezogen werden, wenn das Kraftfahrzeug auch ein Kalibriergerät umfasst. So kann beispielweise auch vorgesehen sein, dass der Ladevorgang unterbrochen wird, um eine weitere Anpassung vornehmen zu können.

Vorteilhaft erweist es sich ferner, wenn das Koppeln des Kalibriergeräts mit der Schnittstelle verriegelt wird. Das hat den Vorteil, dass eine sichere Kommunikationsverbindung zwischen dem Kalibriergerät und der Schnittstelle erreicht werden kann. Das Verriegeln erfolgt vorzugsweise mechanisch, indem zum Beispiel ein Steckverbinder des Kalibriergeräts mit einem entsprechenden komplementären Steckverbinder der Schnittstelle mechanisch verbunden wird. Die Verriegelung kann beispielsweise mittels Rastnasen, Bajonettverschlüssen, aber auch Schrauben und/oder dergleichen erfolgen.

Vorzugsweise ist die Schnittstelle zumindest teilweise durch ein Ladekabel der Ladestation und/oder das Kalibriergerät zumindest teilweise durch einen Ladestecker bereitgestellt. Das hat den Vorteil, dass die Erfindung auf einfache Weise bei Ladestationen integriert werden kann. Ist nämlich die Schnittstelle durch das Ladekabel gebildet, braucht keine separate hardwareseitige Schnittstelle an der Ladestation mehr vorgesehen zu sein. Vielmehr reicht das Ladekabel dazu aus, mit dem Kommunikationsmodul in Kommunikationsverbindung treten zu können. In diesem Zusammenhang erweist es sich ebenfalls als vorteilhaft, wenn das Kalibriergerät zumindest teilweise durch einen Ladestecker bereitgestellt wird. Dadurch kann die Verbindung des Kalibriergeräts mit dem Kommunikationsmodul insbesondere über das Ladekabel auf einfache Weise hergestellt werden. Besonders vorteilhaft erweist sich diese Ausgestaltung insbesondere dann, wenn ein Ladestecker des Kraftfahrzeugs zugleich auch das Kalibriergerät umfasst. In diesem Fall braucht nämlich dann lediglich das Ladekabel an den Ladestecker des Kraftfahrzeugs angeschlossen zu werden, um die erfindungsgemäße Funktionalität realisieren zu können. Für diesen Zweck kann vorgesehen sein, dass ein Ladevorgang zunächst noch nicht aktiviert wird, sondern erst dann, wenn das Einstellen beendet ist.

Insbesondere erweist es sich als vorteilhaft, wenn das leitungsgebundene Kommunizieren zumindest teilweise über wenigstens zwei elektrische Leitungen des Ladekabels, mittels denen zumindest teilweise auch eine Ladespannung der Ladestation bereitgestellt wird, und/oder eine Pilotleitung des Ladekabels erfolgt. Dadurch braucht keine separate Schnittstelle mehr vorgesehen zu werden. Vielmehr kann hardwareseitig eine Installation der Ladestation genutzt werden, wie sie in der Regel ohnehin bei Ladestationen der gattungsgemäßen Art schon vorgesehen ist. Besonders vorteilhaft erweist es sich, wenn die Kommunikation ausschließlich über die wenigstens zwei elektrischen Leitungen des Ladekabels erfolgt, weil dann nämlich die separate Pilotleitung beim Ladekabel zumindest für diesen Zweck entbehrlich sein kann. Jedenfalls können zumindest die Qualität und Zuverlässigkeit der Kommunikation verbessert werden.

Die für die erfindungsgemäßen Verfahren angegebenen Wirkungen und Vorteile gelten gleichermaßen für die erfindungsgemäßen Kalibriergeräte, die erfindungsgemäßen Kommunikationsmodule sowie die erfindungsgemäße Ladestation und umgekehrt. Insofern können für Verfahrensmerkmale auch Vorrichtungsmerkmale und umgekehrt formuliert sein.

Weitere Vorteile und Merkmale ergeben sich anhand der folgenden Beschreibung von Ausführungsbeispielen. In den Figuren bezeichnen gleiche Bezugszeichen gleiche Merkmale und Funktionen.
- FIG 1: in einer schematischen Darstellung eine Ladestation, an der ein Kraftfahrzeug zum Zuführen von elektrischer Energie von der Ladestation zum Kraftfahrzeug angeschlossen ist,
- FIG 2: eine schematische Diagrammdarstellung eines Datentelegramms mit Datenelementen als Kommunikationssignal, wie es für die Kommunikation über ein zwei elektrische Leitungen aufweisendes Ladeanschlusskabel gemäß FIG 1 mittels jeweiliger ladestationsseitiger und kraftfahrzeugseitiger Kommunikationsadapter genutzt wird,
- FIG 3: eine schematische Diagrammdarstellung für ein Datenelement des Datentelegramms gemäß FIG 2, und
- FIG 4: in einer schematischen Darstellung wie FIG 1 ein Kalibrierstecker, der zum Einstellen von Kommunikationsparametern an das Ladeanschlusskabel der Ladestation angeschlossen ist.

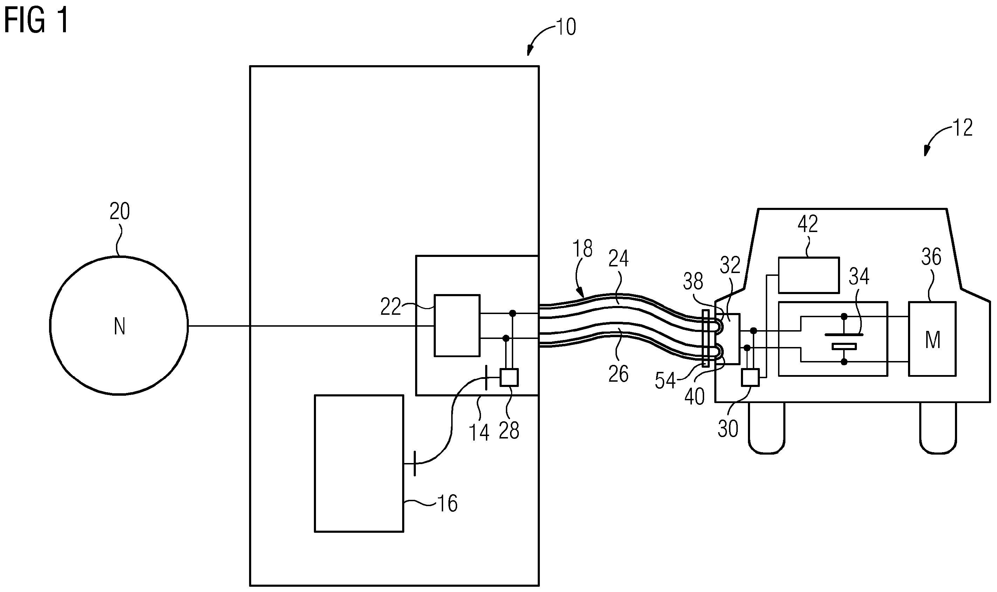

FIG 1 zeigt in einer schematischen Darstellung eine Ladestation 10 zum Zuführen von elektrischer Energie zu einem mit der Ladestation 10 elektrisch gekoppelten Kraftfahrzeug 12, welches vorliegend ein Elektrofahrzeug ist. Das Kraftfahrzeug 12 kann jedoch dem Grunde nach auch ein Hybridfahrzeug oder ein konventionelles Kraftfahrzeug sein.

Die Ladestation 10 weist eine Ladeeinheit 14 auf, die dazu dient, die elektrische Energie für das Kraftfahrzeug 12 bereitzustellen. Zu diesem Zweck ist die Ladeeinheit 14 zum Erhalten von elektrischer Energie an eine ladestationsexterne Energiequelle 20, hier ein öffentliches Energieversorgungsnetz, angeschlossen, welches die elektrische Energie unter Nutzung einer elektrischen Wechselspannung bereitstellt. Die Ladeeinheit 14 weist vorliegend ferner einen Energiewandler 22 auf, der zum Wandeln der von der Energiequelle 20 erhaltenen elektrischen Energie dient. Zu diesem Zweck ist der Energiewandler 22 vorliegend mit einer Gleichrichterfunktion und einem DC/DC-Wandler ausgebildet.

Die Ladestation 10 umfasst ferner eine mit der Ladeeinheit 14 kommunikationstechnisch gekoppelte Steuereinheit 16, die dazu ausgebildet ist, eine Kommunikationsverbindung zum Kraftfahrzeug 12 herzustellen und das Zuführen von elektrischer Energie abhängig von empfangenen Energiespeicherdaten des Kraftfahrzeugs einzustellen. Zu diesem Zweck kann mittels der Steuereinheit 16 der Energiewandler 22 in geeigneter Weise gesteuert werden.

Ferner umfasst die Ladestation 10 ein mit einem ersten Ende mit der Ladeeinheit 14 elektrisch gekoppeltes elektrisches Ladeanschlusskabel 18 als Ladekabel, das vorliegend genau zwei elektrische Leitungen 24, 26 zum Bereitstellen einer elektrischen Ladespannung aufweist, die vorliegend eine Gleichspannung ist. Das Ladeanschlusskabel 18 weist an einem dem ersten Ende gegenüberliegenden zweiten Ende einen Steckverbinder 54 auf, der zum lösbaren elektromechanischen Koppeln einer einen geeigneten Steckverbinder umfassenden Ladeanschlusseinheit 32 des Kraftfahrzeugs 12 dient.

Weiterhin umfasst die Ladestation 10 einen mit der Steuereinheit 16 kommunikationstechnisch gekoppelten und an die wenigstens zwei elektrischen Leitungen 24, 26 angeschlossenen Kommunikationsadapter 28 als Kommunikationsmodul zum Herstellen der Kommunikationsverbindung zum Kraftfahrzeug 12 über die zwei elektrischen Leitungen 24, 26.

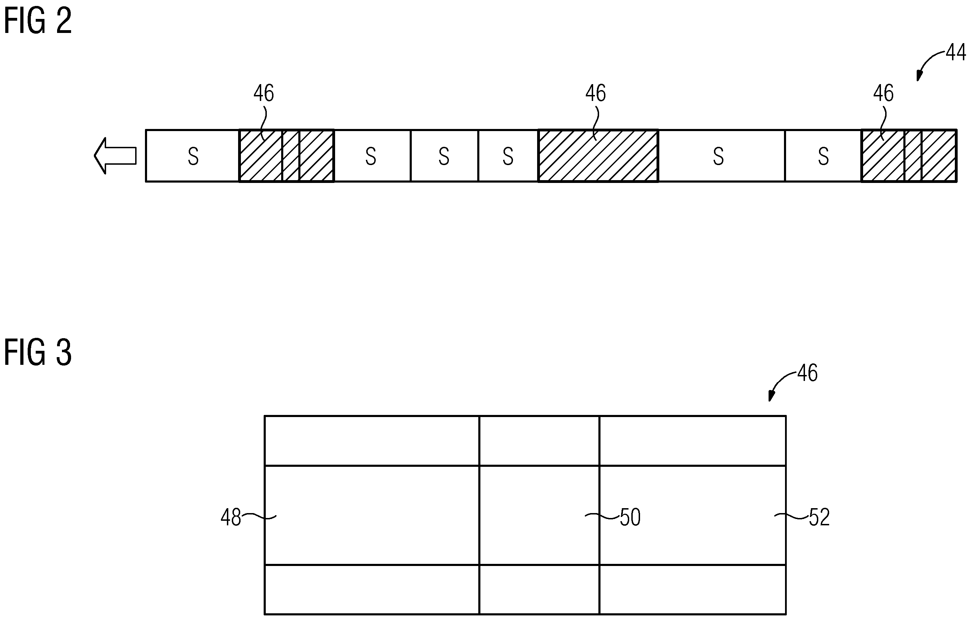

Der Kommunikationsadapter 28 ist ausgebildet, eine an Leitungseigenschaften des Ladeanschlusskabels 18 angepasste Modulation zu nutzen, zu welchem Zweck er einen entsprechend ausgebildeten, nicht dargestellten Modulator aufweist, mittels dem entsprechend modulierte Kommunikationssignale auf die beiden elektrischen Leitungen 24, 26 aufgegeben werden können. Zu diesem Zweck werden entsprechende Kommunikationsparameter genutzt, mittels denen die Kommunikationssignale hinsichtlich ihrer elektrischen Eigenschaften eingestellt werden können, vorliegend eine Frequenz und eine Amplitude. Darüber hinaus können alternativ oder ergänzend auch andere Kommunikationsparameter genutzt werden. Einige der Kommunikationsparameter können auch fest vorgegeben sein, sodass sie nicht eingestellt werden können. Darüber hinaus umfasst der Kommunikationsadapter 28 einen an das Modulationsverfahren angepassten Demodulator, mittels dem empfangene Kommunikationssignale demoduliert werden können. Auch hier können entsprechende Kommunikationsparameter genutzt werden, beispielsweise eine Dämpfung und/oder dergleichen. Die Kommunikationssignale können insbesondere ein Datentelegramm 44 mit Datenelementen 46 umfassen, wie im Folgenden noch anhand von FIG 2 weiter erläutert wird.

Vorliegend wird eine QAM-Modulation genutzt. Es können jedoch auch geeignete andere Modulationsverfahren zum Einsatz kommen. Auch hier kann vorgesehen sein, dass das jeweilige Modulationsverfahren mittels einem oder mehreren Kommunikationsparametern ausgewählt und/oder eingestellt wird.

Die Ladestation 10 ist vorliegend als Ladesäule an einem Abstellplatz für das Kraftfahrzeug 12 aufgestellt, sodass das auf dem Abstellplatz abgestellte Kraftfahrzeug 12 mittels des Ladeanschlusskabels 18 energietechnisch, das heißt, insbesondere elektrisch mit der Ladestation 10 lösbar gekoppelt werden kann, sodass die Ladestation 10 elektrische Energie zum Kraftfahrzeug 12 zuführen kann.

Aus FIG 1 ist ferner ersichtlich, dass das Kraftfahrzeug 12 mittels des Ladeanschlusskabels 18 an die Ladestation 10 angeschlossen ist. Zu diesem Zweck weist das Kraftfahrzeug 12 die Ladeanschlusseinheit 32 mit einem komplementär zum Steckverbinder 54 ausgebildeten nicht bezeichneten Steckverbinder mit vorliegend zwei Anschlusskontakten 38, 40 auf, wobei die Ladeanschlusseinheit 32 zum elektrischen Anschließen des elektrischen Ladeanschlusskabels 18 der Ladestation 10 mit den zwei elektrischen Leitungen 24, 26 zum Bereitstellen der elektrischen Ladespannung ausgebildet ist.

Darüber hinaus weist das Kraftfahrzeug 12 eine elektrische Antriebseinrichtung 36 zum Antreiben des Kraftfahrzeugs 12 in einem bestimmungsgemäßen Fahrbetrieb und einen mit der Antriebseinrichtung 36 elektrisch gekoppelten elektrischen Energiespeicher 34 auf, der vorliegend als Lithium-Ion-Akkumulator ausgebildet ist.

Eine Bemessungsspannung des elektrischen Energiespeichers 34 beträgt vorliegend etwa 450 V. Bei dieser Spannung handelt es sich um eine Hochvoltspannung im Sinne der Normung, beispielsweise der Norm ECE R 100. Beim Betrieb von elektrischen Anlagen mit Hochvolt sind bestimmte Normerfordernisse zu erfüllen. Sowohl die Ladestation 10 als auch das Kraftfahrzeug 12 sind hierfür entsprechend ausgebildet.

Mit dem Energiespeicher 34 ist ferner die Ladeanschlusseinheit 32 elektrisch gekoppelt. Hierzu ist ein jeweiliger Anschlusspol des Energiespeichers 34 mit einem jeweiligen der Anschlusskontakte 38, 40 der Ladeanschlusseinheit 32 elektrisch gekoppelt, sodass dem Energiespeicher 34 bei einem Anschluss des Kraftfahrzeugs 12 an die Ladestation 10, wie in FIG 1 dargestellt, elektrische Energie zugeführt werden kann. Dem Grunde nach besteht aber auch die Möglichkeit, dem Energiespeicher 34 auf diesem Wege elektrische Energie zu entnehmen.

Das Kraftfahrzeug 12 weist ferner eine Fahrzeugsteuereinheit 42 auf, die kommunikationstechnisch mit nicht weiter dargestellten Sensoren gekoppelt ist, mittels denen Zustandsgrößen und/oder Parameter des dem elektrischen Energiespeichers 34 erfasst werden können. Vorliegend umfassen die Zustandsgrößen einen Ladungszustand und eine Temperatur des Energiespeichers 34. Als Parameter werden eine elektrische Bemessungsspannung und eine Ladeleistung des Energiespeichers 34 erfasst. Die Fahrzeugsteuereinheit 42 ist ausgebildet, eine Kommunikationsverbindung zur Ladestation 10 herzustellen und Energiespeicherdaten über die Kommunikationsverbindung an die Ladestation 10 zu übermitteln, um das Zuführen oder gegebenenfalls auch ein Entnehmen von elektrischer Energie abhängig von den Energiespeicherdaten einzustellen.

Vorliegend umfassen die Energiespeicherdaten einen Ladungszustand, eine Temperatur und eine Bemessungsleistung sowie eine Bemessungsspannung des elektrischen Energiespeichers 34. Darüber hinaus können bedarfsweise jedoch weitere Zustandsdaten des elektrischen Energiespeichers 34 hinzugefügt werden oder auch einige von den zuvor genannten Energiespeicherdaten weggelassen werden, wenn dies für die aktuelle Anwendung zweckmäßig beziehungsweise sinnvoll ist.

Ferner umfasst das Kraftfahrzeug 12 einen mit der Fahrzeugsteuereinheit 42 kommunikationstechnisch gekoppelten und an die zwei Anschlusskontakte 38, 40 angeschlossenen Kommunikationsadapter 30 zum Herstellen der Kommunikationsverbindung zur Ladestation 10 über die zwei elektrischen Leitungen 24, 26 des Ladeanschlusskabels 18.

Der Kommunikationsadapter 30 ist im Wesentlichen gleich wie der Kommunikationsadapter 28 der Ladestation 10 ausgebildet. Je nach Bedarf kann der Kommunikationsadapter 30 jedoch auch abweichend hiervon ausgebildet sein, um zum Beispiel kraftfahrzeugspezifische Eigenschaften berücksichtigen zu können. Sowohl der Kommunikationsadapter 28 als auch der Kommunikationsadapter 30 sind ausgebildet, eine galvanische Trennung zwischen der Kommunikationsverbindung zur Steuereinheit 16 beziehungsweise Fahrzeugsteuereinheit 42 und den elektrischen Leitungen 24, 26 herzustellen. Die Kommunikationsadapter 28, 30 können zu diesem Zweck geeignete Übertrager aufweisen, die es erlauben, ein Kommunikationssignal auf die elektrischen Leitungen 24, 26 zu geben, ohne eine galvanische Verbindung beziehungsweise eine elektrisch leitende Verbindung herstellen zu müssen. Zu diesem Zweck kann vorgesehen sein, dass die Kommunikationsadapter 28, 30 eine vorgegebene Modulation nutzen.

Über den gleichen kommunikationstechnischen Kopplungsweg können natürlich auch Kommunikationssignale durch die Kommunikationsadapter 28, 30 empfangen werden. Empfangene Kommunikationssignale können mittels der Demodulatoren demoduliert und gegebenenfalls auch decodiert und falls erforderlich auch entschlüsselt werden. Infolgedessen kann zum Senden vorgesehen sein, dass die Kommunikationsadapter 28, 30 einen jeweiligen entsprechenden Codierer und gegebenenfalls auch einen jeweiligen entsprechenden Verschlüsseler umfassen, um die zu übertragenden Daten in geeigneter Weise für die Kommunikationsverbindung bereitstellen zu können.

Als Modulation können unterschiedlichste Modulationsverfahren dem Grunde nach vorgesehen sein, so zum Beispiel Amplitudenmodulation, Frequenzmodulation, Kombinationen hiervon, digitale Modulationen und/oder dergleichen.

Um die Kommunikation auf den elektrischen Leitungen 24, 26 zu verbessern, ist vorliegend vorgesehen, dass der Energiewandler 22 eine galvanische Trennung bereitstellt. Die Leitungen 24, 26 sind somit gegenüber einem nicht dargestellten Erdpotential elektrisch getrennt. Hierdurch kann eine unerwünschte kapazitive Kopplung reduziert werden, die die Kommunikation über die elektrischen Leitungen 24, 26 beeinträchtigen könnte.

Ferner ist vorliegend vorgesehen, dass die Kommunikationsadapter 28, 30 ausgebildet sind, eine digitale Kommunikation auf Basis eines gesicherten Protokoll-Standards zu nutzen. Dies wird im Folgenden anhand von FIG 2 und 3 weiter erläutert, welche als Kommunikationssignal eine schematische Darstellung eines Datentelegramms 44 mit Datenelementen 46 zeigen, das von den Kommunikationsadaptern 28, 30 zur Kommunikation über die elektrischen Leitungen 24, 26 untereinander genutzt werden kann.

Damit auch ohne das Erfordernis der Pilotleitung eine Betriebssicherheit in Bezug auf die Kommunikation während des Aufladens beziehungsweise während des Zuführens von elektrischer Energie von der Ladestation zum Kraftfahrzeug gewährleistet werden kann, ist vorzugsweise eine Assoziierung der Ladestation 10 zum Kraftfahrzeug 12 sicherzustellen. Darüber hinaus sollte eine Signalisierung zumindest des Ladezustands vorzugsweise unter mit einer Unterbrechung des Zuführens der elektrischen Energie bei einem Fehler oder beim Lösen des Ladeanschlusskabels 18 von der Ladeanschlusseinheit 32 ermöglicht werden. Ferner soll das Übersprechen nicht nur beherrscht werden können, sondern vorzugsweise zumindest deutlich reduziert werden können. Dadurch kann auch eine Latenz bei der Kommunikation über die Kommunikationsverbindung reduziert und eine tatsächlich zur Verfügung stehende Bandbreite bei der Kommunikation erhöht werden.

Dabei kann die sichere Assoziierung zwischen der Ladestation 10 und dem Kraftfahrzeug 12 dadurch erreicht werden, dass die Kommunikationssignale nicht mehr erdbezogen unter Nutzung der Pilotleitung, sondern auf beliebige elektrische Leitungen des Ladeanschlusskabels 18 aufgegeben werden, vorliegend auf die elektrischen Leitungen 24, 26. Erfolgt das Laden mittels einer Ladespannung die eine Gleichspannung ist, können hierzu eine Plus-Leitung und eine entsprechend zugehörige Minus-Leitung benutzt werden. Beim Nutzen einer Ladespannung, die eine einphasige Wechselspannung ist, kann dies eine Phasen-Leistung und eine zugehörige Null-Leitung sein. Wird eine mehrphasige, beispielsweise dreiphasige, Wechselspannung als Ladespannung genutzt, kann vorgesehen sein, dass die Kommunikation über wenigstens zwei Phasen-Leitungen erfolgt. Eine Erdleitung braucht deshalb für die Kommunikation nicht benutzt zu werden.

Eine Dämpfung des Übersprechens kann dadurch reduziert werden, dass im Fall eines Ladens mit einer Gleichspannung ein Energiewandler beziehungsweise ein Umrichter oder auch eine Stromquelle mit einer geringen Koppelkapazität zwischen einer Wechselspannungsseite der Energiequelle 20 und einer Gleichspannungsseite, hier des Ladeanschlusskabels 18, realisiert wird, zum Beispiel in dem vor Beginn des Startens des Ladevorgangs beziehungsweise des Zuführens von elektrischer Energie die Verbindung des Ladeanschlusskabels 18 mit der Energiequelle 20 ohnehin durch ein nicht dargestelltes Schütz getrennt ist. Wird eine Wechselspannung als Ladespannung genutzt, kann in eine Zuführung zum Ladeanschlusskabel 18 eine Hochfrequenz-Filterung vorgesehen werden, beispielsweise an einer Energiezuführung beziehungsweise einen Anschluss für die ladestationsexterne Energiequelle 20 oder dergleichen. Die Hochfrequenz-Filterung kann zum Beispiel ein Filter für leitungsgebundene Funkstörungen umfassen. Dadurch kann ein Assoziierungsmechanismus, beispielsweise Session Layer Attenuation Characterization (SLAC) aufgrund der geringeren Dämpfung eindeutigere Ergebnisse liefern.

Die sichere Übermittlung von Ladungszuständen des elektrischen Energiespeichers 34 kann durch Anwenden von Mechanismen in der Automatisierungstechnik erreicht werden, bei denen die entsprechenden Zustandsdaten, wie im Folgenden noch anhand von FIG 2 und 3 weiter erläutert wird, übertragen werden.

FIG 2 zeigt in einer schematischen Darstellung ein Datentelegramm 44, wie er zur Herstellung der Kommunikationsverbindung zwischen den Kommunikationsadaptern 28, 30 über die elektrischen Leitungen 24, 26 zum Einsatz kommen kann. Das Datentelegramm 44 umfasst hier eine Abfolge von mehreren Datenstromsegmenten S, die Standarddaten umfassen, inklusive Sicherheitprozessdateneinheiten (Englisch: protocol data unit, PDU), die der gesicherten Kommunikation über die elektrischen Leitungen 24, 26 dienen. Mehrere aufeinanderfolgende der Datenstromabschnitte S trennen Datenelemente 46, die in ihrer Struktur in FIG 3 schematisch dargestellt sind.

Vorliegend ist ein kontinuierlicher Datenstrom vorgesehen, der bidirektional erfolgt. Aufgrund der gewählten Modulation kann die bidirektionale Kommunikationsverbindung zeitgleich hergestellt werden, sodass eine Vollduplex-Kommunikationsverbindung zur Verfügung steht.

FIG 3 zeigt in der schematischen Darstellung eines der Datenelemente 46 gemäß FIG 2, bei welchem Zustandsinformationen des elektrischen Energiespeichers 34 als F-Input/Output-Daten 48 übermittelt werden können. Die F-Input/Output-Daten 48 können zum Beispiel bis zu 123 Bytes umfassen. Ein Status-/Kontrolldatum 50 folgt den F-Input/Output-Daten 48 unmittelbar. Dieses kann ein Byte Daten umfassen.

Unmittelbar anschließend können Fehlerkorrekturdaten wie zum Beispiel Fehlerkorrektur-Bytes 52 folgen, die beispielsweise drei oder auch vier Bytes umfassen können. Mittels der Fehlerkorrektur-Bytes 52 kann eine fehlertolerante Codierung der Daten erreicht werden, sodass bei Empfang des Datenelements 46 empfangsseitig geprüft werden kann, ob die F-Input/Output-Daten 48 verfälscht sind oder nicht. Darüber hinaus kann auch eine gewisse Anzahl von Fehlern korrigiert werden.

Dies ermöglicht es, eine hochgesicherte Kommunikationsverbindung zu erreichen. Darüber hinaus können die zu übertragenden Daten des Datentelegrams 46 natürlich auch zusätzlich verschlüsselt sein, um die Sicherheit, insbesondere in Bezug auf unzulässige Eingriffe in die Kommunikation besser zu schützen. Hierzu können entsprechende Verschlüsselungsalgorithmen vorgesehen sein.

Um eine hohe Sicherheit bezüglich der Kommunikationsverbindung erreichen zu können, kann eine Überwachungszeit vorgesehen sein, die vorliegend kleiner als etwa 20ms, beispielsweise etwa 16ms oder auch etwa 8ms oder auch weniger beträgt.

Nach Ablauf der Überwachungszeit kann ein Sicherheitsfehler erkannt werden und sicherheitskritische Einstellungen, beispielsweise die Energiezuführung von der Ladestation 10 zum Kraftfahrzeug 12, abgeschaltet werden. Die erfindungsgemäße Auslegung des Systems gewährleistet eine gute Verfügbarkeit in Bezug auf die zu übertragenden Daten.

Dadurch kann es bei Verlust einzelner Datenelemente zwar zu geringfügig erhöhter Übertragungslatenz und/oder zusätzlicher Verarbeitungszeit in den Kommunikationsadaptern 28, 13 kommen, jedoch können ein Time-Out-Fehler und ein daraus folgender Abbruch der Energiezuführung von der Ladestation 10 zum Kraftfahrzeug 12 weitgehend vermieden werden.

Zur weiteren Erhöhung der Sicherheit der Kommunikationsverbindung kann auch ein Stromsollwert für die Zuführung der elektrischen Energie von der Ladestation 10 zum Kraftfahrzeug 12 übertragen werden, vorzugsweise unter Nutzung der oben beschriebenen sicheren Kommunikation, beispielsweise im gleichen Datenelement 46 mit dem zuvor beschriebenen kurzen Zyklus. Im Gegensatz zu im Stand der Technik genutzten Zykluszeiten von zum Beispiel etwa 60s kann bei der Wahl der erfindungsgemäßen Zykluszeit eine sichere Direktverbindung als Kommunikationsverbindung zwischen der Ladestation 10 und dem Kraftfahrzeug 12 realisiert werden.

Das in FIG 2 dargestellte Datentelegramm 44 kann unter Nutzung von Framing realisiert werden, wie es beispielsweise aus Ethernet bekannt ist, in dem zum Beispiel entsprechende Ethernet-Frames genutzt werden. Unter Berücksichtigung des OSI-Schichtmodells ist es mit der Erfindung möglich, einen Ausfall der Kommunikation aufgrund des Überschreitens der Überwachungszeit auf Schicht 7 erkennen zu können. Insgesamt ermöglicht es die Erfindung auch, die Reihenfolge der Datenelemente 46 überwachbar zu machen.

Insgesamt können die Kommunikation zwischen der Ladestation 10 und dem Kraftfahrzeug 12 und auch das Ladeanschlusskabel 18 vereinfacht werden. Die im Stand der Technik übliche Pilot-Leitung, die bei erdbezogener Kommunikation störanfällig ist, kann vollständig eingespart werden. Darüber hinaus erlaubt es die Erfindung, auch bestehende Kommunikationskonzepte basierend auf zum Beispiel Profinet/Profisafe zu nutzen beziehungsweise importieren und dadurch Simatic-kompatible Lösungen zu ermöglichen.

Insgesamt ist die Erfindung jedoch nicht auf das leitungsgebundene Laden beschränkt und kann dem Grunde nach auch bei einer drahtlosen energietechnischen Kopplung, zum Beispiel induktives Laden oder dergleichen, angewendet werden. In diesem Fall kann natürlich auch die Kommunikationsverbindung zwischen der Ladestation und dem Kommunikationsmodul drahtlos, beispielsweise basierend auf Nahfunk, Infrarot, Ultraschall und/oder dergleichen realisiert sein.

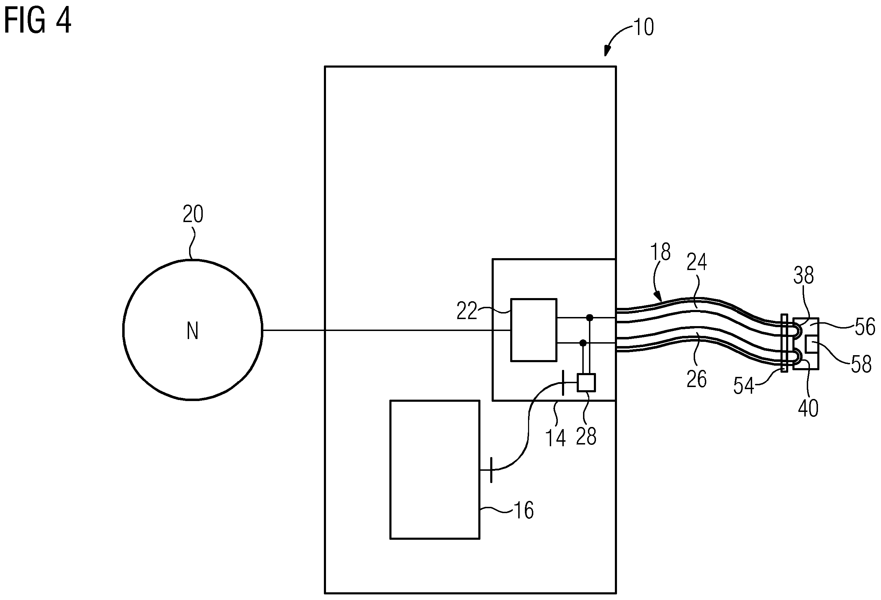

FIG 4 zeigt in einer schematischen Darstellung wie FIG 1 die Ladestation 10, wie sie zuvor bezüglich des Ladens des Kraftfahrzeugs 12 erläutert wurde. Im Unterschied zur Darstellung gemäß FIG 1 ist bei der Darstellung gemäß FIG 4 nunmehr an dem Ladeanschlusskabel 18 anstelle des Kraftfahrzeugs 12 beziehungsweise seiner Ladeanschlusseinheit 32 ein Kalibriergerät 56 an den Steckverbinder 54 angeschlossen. Das Kalibriergerät 56 weist ebenfalls Anschlusskontakte 38, 40 auf, die die entsprechenden Leitungen 24, 26 des Ladeanschlusskabels 18 kontaktieren. Auch hier ist eine lösbare elektromechanische Steckverbindung vorgesehen.

Das Kalibriergerät 56 ist eine tragbare Einrichtung, die eine Steuereinheit 58 umfasst, die mit den Anschlusskontakten 38, 40 elektrisch gekoppelt ist. Die Steuereinheit 58 dient dazu, Authentifizierungsdaten in Form einer Datei zu speichern und gemäß einem vorgegebenen Kommunikationsstandard über das Ladekabel 18 mit dem Kommunikationsadapter 28 der Ladestation 10 in Kommunikationsverbindung zu treten. Zu diesem Zweck nutzt das Kalibriergerät 56 den gleichen Kommunikationsstandard, wie er bereits zuvor bezüglich des Ladevorgangs des Kraftfahrzeugs 12 an der Ladestation 10 erläutert wurde. Auf die diesbezüglichen obigen Ausführungen wird deshalb ergänzend verwiesen.

Das Kalibriergerät 56 dient zum Einstellen der vorgenannten Kommunikationsparameter des Kommunikationsadapters 28, um eine zuverlässige Kommunikation während des bestimmungsgemäßen Betriebs der Ladestation 10 zu ermöglichen. Bezüglich der möglichen Kommunikationsparameter des Kommunikationsadapters 28 wird ebenfalls auf die obigen Ausführungen verwiesen. Das Ladekabel 18 stellt somit zugleich auch eine Schnittstelle bereit, die mit dem Kalibriergerät 56 gekoppelt werden kann, um die gewünschte Einstellung der Kommunikationsparameter vornehmen zu können.

Sobald das Kalibriergerät 56 mit dem Ladeanschlusskabel 18 und somit auch mit dem Kommunikationsadapter 28 elektrisch gekoppelt ist, werden von der Steuereinheit 58 die Authentifizierungsdaten an den Kommunikationsadapter 28 übermittelt.

Sobald die Authentifizierungsdaten vom Kommunikationsadapter 28 empfangen und verifiziert worden sind, sendet der Kommunikationsadapter 28 ein vorgegebenes Datentelegramm 44, wie es oben bereits zur FIG 2 erläutert worden ist. Das Kalibriergerät 56, insbesondere die Steuereinheit 58, empfängt das Kommunikationssignal, wertet das Kommunikationssignal hinsichtlich der relevanten Kommunikationsparameter aus und ermittelt hieraus dann Signalparameter. Die ermittelten Signalparameter werden sodann vom Kalibriergerät 56 an den Kommunikationsadapter 28 übermittelt.

Der Kommunikationsadapter 28 empfängt die Signalparameter und stellt seine entsprechenden Kommunikationsparameter abhängig von den Signalparametern ein. Das Auswerten der Authentifizierungsdaten ist zu diesem Zeitpunkt bereits erfolgt. Natürlich kann auch vorgesehen sein, dass das Datentelegramm 44 bereits vor dem Authentifizieren des Kalibriergeräts 56 vom Kommunikationsadapter 28 ausgesendet wird. In diesem Fall sollte dann vorzugsweise vor dem Durchführen des Einstellens der Kommunikationsparameter durch den Kommunikationsadapter 28 die Authentifizierung des Kalibriergeräts 56 durchgeführt beziehungsweise geprüft werden und das Einstellen abhängig vom Auswerten der Authentifizierungsdaten des Kalibriergeräts 56 erfolgen. Darüber hinaus ist es natürlich auch möglich, andere Abwandlungen hiervon vorzusehen.

Zum Auswerten der Signalparameter sieht der Kommunikationsadapter 28 vor, dass hieraus Werte für die Kommunikationsparameter ermittelt werden. In dieser Ausgestaltung braucht das Kalibriergerät 56 also im Wesentlichen eine Empfangseinheit, die es erlaubt, aus dem Datentelegramm 46 die entsprechenden Signalparameter zu ermitteln, sodass der Kommunikationsadapter 28 aus den Signalparametern die gewünschten Werte für die Kommunikationsparameter ermitteln kann. Entsprechend ist eine Sendeeinheit umfasst, damit die Signalparameter vom Kalibriergerät 56 an den Kommunikationsadapter 28 übermittelt werden können.

Das Einstellen der Kommunikationsparameter des Kommunikationsadapters 28 erfolgt vorliegend automatisiert, sobald nämlich das Kalibriergerät 56 authentifiziert ist. Es braucht also keine weitere nutzerseitige Eingabe erfolgen, beispielsweise von Wartungspersonal oder dergleichen.

Darüber hinaus besteht die Möglichkeit, mit dem Kalibriergerät 56 zu überwachen, ob der Kommunikationsadapter 28 die Kommunikationsparameter wie vorgegeben eingestellt hat. Zu diesem Zweck kann vorgesehen sein, dass das Kalibriergerät 56 ein Abfragesignal an den Kommunikationsadapter 28 aussendet, dieser das Abfragesignal empfängt und auswertet und die aktuellen eingestellten Kommunikationsparameter als Antwort an das Kalibriergerät 56 zurückübermittelt. Die Steuereinheit 58 des Kalibriergeräts 56 kann dann die empfangenen eingestellten Werte der Kommunikationsparameter mit Werten für die Kommunikationsparameter vergleichen, die die Steuereinheit 58 anhand der Signalparameter selbst ermittelt hat. Dadurch kann die Einstellfunktionalität des Kommunikationsadapters 28 überwacht werden.

Schließlich besteht auch die Möglichkeit, dass gemäß einem weiteren Aspekt das Kalibriergerät 56 das Datentelegramm 44 auswertet und hieraus Werte für die Kommunikationsparameter ermittelt. Es braucht an dieser Stelle also kein Signalparameter an dem Kommunikationsadapter übermittelt zu werden, und der Kommunikationsadapter 28 braucht aus diesen Signalparametern dann nicht selbst Werte für die Kommunikationsparameter zu ermitteln. Stattdessen werden die Werte für die Kommunikationsparameter durch die Steuereinheit 58 des Kalibriergeräts 56 ermittelt und gegenüber der vorhergehenden Ausgestaltung unmittelbar an den Kommunikationsadapter 58 übermittelt. Der Kommunikationsadapter 58 empfängt die Werte für die Kommunikationsparameter und stellt seine Kommunikationsparameter entsprechend den vom Kalibriergerät 56 übermittelten Werten ein, sobald die Authentifizierung anhand der Authentifizierungsdaten, die vom Kalibriergerät 56 an den Kommunikationsadapter 28 übermittelt worden sind, verifiziert worden sind. Auch hier kann eine Überwachungsfunktionalität wie zuvor erläutert vorgesehen sein.

Natürlich ist die Erfindung nicht darauf beschränkt, eine leitungsgebundene Kommunikationsverbindung über die elektrischen Leitungen 24, 26 des Ladeanschlusskabels 18 zu realisieren. Sie lässt sich natürlich gleichermaßen auch dann anwenden, wenn die Kommunikation unter Nutzung einer PilotLeitung des Ladeanschlusskabels 18 erfolgt.

Darüber hinaus ist es natürlich möglich, dass das Kalibriergerät 56 auch einstückig mit der Ladeanschlusseinheit 32 des Kraftfahrzeugs 12 ausgebildet ist. Bei einer solchen Ausgestaltung ist es dann möglich, dass aufgrund des Anschließens des Kraftfahrzeugs 12 an die Ladestation 10 bereits ein Einstellverfahren gemäß der Erfindung durchgeführt werden kann. Hierbei kann insbesondere vorgesehen sein, dass während des Einstellvorgangs gemäß der Erfindung der Ladevorgang noch nicht erfolgt. Diese Ausgestaltung eignet sich deshalb insbesondere auch für eine Erstinbetriebnahme einer gerade aufgestellten Ladestation 10.

Die Beschreibung dient ausschließlich der Erläuterung der Erfindung und soll diese nicht beschränken.

## Patentansprüche

1. Verfahren zum Einstellen von wenigstens einem Kommunikationsparameter eines Kommunikationsmoduls (28) einer Ladestation (10), die stationär beziehungsweise ortsfest angeordnet und dazu ausgebildet ist, mit elektrischen Einrichtungen, insbesondere elektrisch antreibbaren Kraftfahrzeugen, energietechnisch gekoppelt zu werden, wobei die energietechnische Kopplung als leitungsgebundene energietechnische Kopplung ausgebildet ist, wobei das Verfahren zum Kommunizieren über eine leitungsgebundene Schnittstelle (18) der Ladestation (10) dient, **gekennzeichnet durch** :
- ein als eine zur Ladestation (10) von Servicepersonal transportierbare und tragbare Einheit ausgebildetes Kalibriergerät (56) mit der leitungsgebundenen Schnittstelle (18) gekoppelt wird,
- Authentifizierungsdaten von dem Kalibriergerät (56) an das Kommunikationsmodul (28) übermittelt werden,
- ein Wert für den wenigstens einen Kommunikationsparameter von dem Kalibriergerät (56) an das Kommunikationsmodul (28) übermittelt wird, und
- der wenigstens eine Kommunikationsparameter vom Kommunikationsmodul (28) abhängig von einem Auswerten der Authentifizierungsdaten durch das Kommunikationsmodul (28) entsprechend dem übermittelten Wert eingestellt wird.

2. Verfahren nach Anspruch 1, **dadurch gekennzeichnet, dass** das Kalibriergerät (56) ein Kommunikationssignal des Kommunikationsmoduls (28) empfängt und den Wert für den wenigstens einen Kommunikationsparameter abhängig von dem empfangenen Kommunikationssignal ermittelt.

3. Verfahren nach Anspruch 2, **dadurch gekennzeichnet, dass** das Kommunikationssignal wenigstens ein Datentelegramm (44) umfasst und der Wert anhand des wenigstens einen Datentelegramms (44) ermittelt wird.

4. Verfahren zum Einstellen von wenigstens einem Kommunikationsparameter eines Kommunikationsmoduls (28) einer Ladestation (10), die stationär beziehungsweise ortsfest angeordnet und dazu ausgebildet ist, mit elektrischen Einrichtungen, insbesondere elektrisch antreibbaren Kraftfahrzeugen, energietechnisch gekoppelt zu werden, wobei die energietechnische Kopplung als leitungsgebundene energietechnische Kopplung ausgebildet ist, wobei das Verfahren zum Kommunizieren über eine leitungsgebundene Schnittstelle (18) der Ladestation (10) dient, **gekennzeichnet durch** :
- ein als eine zur Ladestation (10) von Servicepersonal transportierbare und tragbare Einheit ausgebildetes Kalibriergerät (56) mit der leitungsgebundenen Schnittstelle (18) gekoppelt wird,
- Authentifizierungsdaten von dem Kalibriergerät (56) an das Kommunikationsmodul (28) übermittelt werden,
- ein Kommunikationssignal des Kommunikationsmoduls (28) vom Kalibriergerät (56) empfangen und ausgewertet wird, um abhängig von dem empfangenen Kommunikationssignal wenigstens einen Signalparameter zu ermitteln,
- der wenigstens eine Signalparameter vom Kalibriergerät (56) an das Kommunikationsmodul (28) übermittelt wird, und
- das Kommunikationsmodul (28) den wenigstens einen Kommunikationsparameter abhängig von dem wenigstens einen Signalparameter und einem Auswerten der Authentifizierungsdaten einstellt.

5. Verfahren nach Anspruch 4, **dadurch gekennzeichnet, dass** das Kommunikationssignal wenigstens ein Datentelegramm (44) umfasst und der Signalparameter anhand des wenigstens einen Datentelegramms (44) ermittelt wird.

6. Verfahren nach einem der vorhergehenden Ansprüche, **dadurch gekennzeichnet, dass** der Wert und/oder ein Ändern des Werts des wenigstens einen Kommunikationsparameters an eine Zentrale übermittelt wird.

7. Verfahren nach einem der vorhergehenden Ansprüche, **dadurch gekennzeichnet, dass** das Einstellen des wenigstens einen Kommunikationsparameters automatisiert erfolgt, wenn das Kalibriergerät (56) authentifiziert ist.

8. Verfahren nach einem der vorhergehenden Ansprüche, **dadurch gekennzeichnet, dass** das Einstellen des wenigstens einen Kommunikationsparameters durch das Kalibriergerät (56) überwacht wird.

9. Verfahren nach einem der vorhergehenden Ansprüche, **dadurch gekennzeichnet, dass** das Koppeln des Kalibriergeräts (56) mit der Schnittstelle (18) verriegelt wird.

10. Verfahren nach einem der vorhergehenden Ansprüche, **dadurch gekennzeichnet, dass** die Schnittstelle (18) zumindest teilweise durch ein Ladekabel der Ladestation (10) und/oder das Kalibriergerät (56) zumindest teilweise durch einen Ladestecker bereitgestellt wird.

11. Verfahren nach Anspruch 10, **dadurch gekennzeichnet, dass** das leitungsgebundene Kommunizieren zumindest teilweise über wenigstens zwei elektrische Leitungen (24, 26) des Ladekabels (18), mittels welcher zumindest teilweise auch eine Ladespannung der Ladestation (10) bereitgestellt wird, und/oder eine Pilotleitung des Ladekabels erfolgt.

12. Kalibriergerät (56) zum Einstellen von wenigstens einem Kommunikationsparameter eines Kommunikationsmoduls (28) einer Ladestation (10), die stationär beziehungsweise ortsfest angeordnet und dazu ausgebildet ist, mit elektrischen Einrichtungen, insbesondere elektrisch antreibbaren Kraftfahrzeugen, energietechnisch gekoppelt zu werden, wobei die energietechnische Kopplung als leitungsgebundene energietechnische Kopplung ausgebildet ist, wobei das Kalibriergerät (56) zum Kommunizieren über eine leitungsgebundene Schnittstelle (18) der Ladestation (10) dient, wobei das Kalibriergerät (56) ausgebildet ist:
- zur Ladestation (10) von Servicepersonal transportierbar und tragbar,
- mit der Schnittstelle (18) gekoppelt zu werden,
- Authentifizierungsdaten an das Kommunikationsmodul (28) zu übermitteln, und
- einen Wert für den wenigstens einen
Kommunikationsparameter an das Kommunikationsmodul (28) zu übermitteln, damit das Kommunikationsmodul (28) den wenigstens einen Kommunikationsparameter abhängig von dem übermittelten Wert und einem Auswerten der Authentifizierungsdaten durch das Kommunikationsmodul (28) einstellt.

13. Kalibriergerät (56) zum Einstellen von wenigstens einem Kommunikationsparameter eines Kommunikationsmoduls (28) einer Ladestation (10), die stationär beziehungsweise ortsfest angeordnet und dazu ausgebildet ist, mit elektrischen Einrichtungen, insbesondere elektrisch antreibbaren Kraftfahrzeugen, energietechnisch gekoppelt zu werden, wobei die energietechnische Kopplung als leitungsgebundene energietechnische Kopplung ausgebildet ist, wobei das Kalibriergerät (56) zum Kommunizieren über eine leitungsgebundene Schnittstelle (18) der Ladestation (10) dient, wobei das Kalibriergerät (56) ausgebildet ist:
- von Servicepersonal zur Ladestation (10) transportierbar und tragbar,
- mit der leitungsgebundenen Schnittstelle (18) gekoppelt zu werden,
- Authentifizierungsdaten an das Kommunikationsmodul (28) zu übermitteln,
- ein Kommunikationssignal des Kommunikationsmoduls (28) zu empfangen und auszuwerten, um abhängig von dem empfangenen Kommunikationssignal wenigstens einen Signalparameter zu ermitteln, und
- den wenigstens einen Signalparameter an das Kommunikationsmodul (28) zu übermitteln, damit das Kommunikationsmodul (28) den wenigstens einen Kommunikationsparameter abhängig von dem wenigstens einen Signalparameter und einem Auswerten der Authentifizierungsdaten einstellt.

14. System, umfassend,
- ein Kalibriergerät (56) nach einem der Patentansprüche 12 oder 13; und;
- eine Ladestation (10) mit einem Ladeanschluss (14, 18) zum Bereitstellen von elektrischer Energie, wobei die Ladestation (10) stationär beziehungsweise ortsfest angeordnet und dazu ausgebildet ist, mit elektrischen Einrichtungen, insbesondere elektrisch antreibbaren Kraftfahrzeugen, energietechnisch gekoppelt zu werden, wobei die energietechnische Kopplung als leitungsgebundene energietechnische Kopplung ausgebildet ist und mit einen mittels einer Steuereinheit (16) steuerbaren und mit dem Ladeanschluss (14, 18) elektrisch gekoppelten Energiewandler (22) sowie ein mit der Steuereinheit (16) kommunikationstechnisch gekoppeltes Kommunikationsmodul (28), das zum Kommunizieren über eine leitungsgebundene Schnittstelle (18) der Ladestation (10) unter Nutzung wenigstens eines Kommunikationsparameters dient;
**dadurch gekennzeichnet**
**dass** das Kommunikationsmodul (28) und das Kalibriergerät (56) eingerichtet sind, ein Verfahren nach einem der Ansprüche 1 bis 11 auszuführen.

## Claims

1. Method for setting at least one communication parameter of a communication module (28) of a charging station (10) which is arranged in a stationary or fixed manner and is designed to be coupled in an energy-related manner to electrical devices, in particular electrically drivable motor vehicles, wherein the energy-related coupling is in the form of wired energy-related coupling, wherein the method is used for communication via a wired interface (18) of the charging station (10), **characterized by**:
- a calibration device (56) which is in the form of a portable unit that can be transported to the charging station (10) by service personnel being coupled to the wired interface (18),
- authentication data being transmitted from the calibration device (56) to the communication module (28),
- a value for the at least one communication parameter being transmitted from the calibration device (56) to the communication module (28), and
- the at least one communication parameter being set by the communication module (28) on the basis of an evaluation of the authentication data by the communication module (28) according to the transmitted value.

2. Method according to Claim 1, **characterized in that** the calibration device (56) receives a communication signal from the communication module (28) and determines the value for the at least one communication parameter on the basis of the received communication signal.

3. Method according to Claim 2, **characterized in that** the communication signal comprises at least one data message (44) and the value is determined on the basis of the at least one data message (44).

4. Method for setting at least one communication parameter of a communication module (28) of a charging station (10) which is arranged in a stationary or fixed manner and is designed to be coupled in an energy-related manner to electrical devices, in particular electrically drivable motor vehicles, wherein the energy-related coupling is in the form of wired energy-related coupling, wherein the method is used for communication via a wired interface (18) of the charging station (10), **characterized by**:
- a calibration device (56) which is in the form of a portable unit that can be transported to the charging station (10) by service personnel being coupled to the wired interface (18),
- authentication data being transmitted from the calibration device (56) to the communication module (28),
- a communication signal from the communication module (28) being received and evaluated by the calibration device (56) in order to determine at least one signal parameter on the basis of the received communication signal,
- the at least one signal parameter being transmitted from the calibration device (56) to the communication module (28), and
- the communication module (28) setting the at least one communication parameter on the basis of the at least one signal parameter and an evaluation of the authentication data.

5. Method according to Claim 4, **characterized in that** the communication signal comprises at least one data message (44) and the signal parameter is determined on the basis of the at least one data message (44).

6. Method according to one of the preceding claims, **characterized in that** the value and/or a change of the value of the at least one communication parameter is/are transmitted to a control centre.

7. Method according to one of the preceding claims, **characterized in that** the at least one communication parameter is set in an automated manner if the calibration device (56) has been authenticated.

8. Method according to one of the preceding claims, **characterized in that** the setting of the at least one communication parameter is monitored by the calibration device (56).

9. Method according to one of the preceding claims, **characterized in that** the coupling of the calibration device (56) to the interface (18) is locked.

10. Method according to one of the preceding claims, **characterized in that** the interface (18) is at least partially provided by a charging cable of the charging station (10) and/or the calibration device (56) is at least partially provided by a charging connector.

11. Method according to Claim 10, **characterized in that** wired communication is at least partially effected via at least two electrical lines (24, 26) of the charging cable (18), which are at least partially also used to provide a charging voltage of the charging station (10), and/or a pilot line of the charging cable.

12. Calibration device (56) for setting at least one communication parameter of a communication module (28) of a charging station (10) which is arranged in a stationary or fixed manner and is designed to be coupled in an energy-related manner to electrical devices, in particular electrically drivable motor vehicles, wherein the energy-related coupling is in the form of wired energy-related coupling, wherein the calibration device (56) is used for communication via a wired interface (18) of the charging station (10), wherein the calibration device (56) is designed:
- to be transportable to the charging station (10) by service personnel and portable,
- to be coupled to the interface (18),
- to transmit authentication data to the communication module (28), and
- to transmit a value for the at least one communication parameter to the communication module (28) so that the communication module (28) sets the at least one communication parameter on the basis of the transmitted value and an evaluation of the authentication data by the communication module (28).

13. Calibration device (56) for setting at least one communication parameter of a communication module (28) of a charging station (10) which is arranged in a stationary or fixed manner and is designed to be coupled in an energy-related manner to electrical devices, in particular electrically drivable motor vehicles, wherein the energy-related coupling is in the form of wired energy-related coupling, wherein the calibration device (56) is used for communication via a wired interface (18) of the charging station (10), wherein the calibration device (56) is designed:
- to be transportable to the charging station (10) by service personnel and portable,
- to be coupled to the wired interface (18),
- to transmit authentication data to the communication module (28),
- to receive and evaluate a communication signal from the communication module (28) in order to determine at least one signal parameter on the basis of the received communication signal, and
- to transmit the at least one signal parameter to the communication module (28) so that the communication module (28) sets the at least one communication parameter on the basis of the at least one signal parameter and an evaluation of the authentication data.

14. System, comprising:
- a calibration device (56) according to either of Patent Claims 12 and 13; and
- a charging station (10) having a charging connection (14, 18) for providing electrical energy, wherein the charging station (10) is arranged in a stationary or fixed manner and is designed to be coupled in an energy-related manner to electrical devices, in particular electrically drivable motor vehicles, wherein the energy-related coupling is in the form of wired energy-related coupling, and having an energy converter (22) which can be controlled by means of a control unit (16) and is electrically coupled to the charging connection (14, 18), and a communication module (28) which is coupled to the control unit (16) using communication technology and is used for communication via a wired interface (18) of the charging station (10) using at least one communication parameter;
**characterized**
**in that** the communication module (28) and the calibration device (56) are configured to carry out a method according to one of Claims 1 to 11.

## Revendications

1. Procédé de réglage d'au moins un paramètre de communication d'un module de communication (28) d'une station de charge (10), qui est aménagée de manière stationnaire ou respectivement fixe et conçue pour être couplée énergétiquement à des dispositifs électriques, en particulier à des véhicules automobiles à propulsion électrique, le couplage énergétique étant conçu comme un couplage énergétique par conduction, le procédé de communication servant à communiquer via une interface liée par conduction (18) de la station de charge (10),
**caractérisé en ce que** :
- un étalonneur (56) conçu comme une unité transportable et portable jusqu'à la station de charge (10) par un personnel de service, est couplé à l'interface liée par conduction (18),
- des données d'authentification sont transmises de l'étalonneur (56) au module de communication (28),
- une valeur pour l'au moins un paramètre de communication est transmise de l'étalonneur (56) au module de communication (28), et
- l'au moins un paramètre de communication est réglé par le module de communication (28) en fonction d'une exploitation des données d'authentification par le module de communication (28) correspondant à la valeur transmise.

2. Procédé selon la revendication 1, **caractérisé en ce que** l'étalonneur (56) reçoit un signal de communication du module de communication (28) et détermine la valeur de l'au moins un paramètre de communication en fonction du signal de communication reçu.

3. Procédé selon la revendication 2, **caractérisé en ce que** le signal de communication comprend au moins un datagramme (44) et **en ce que** la valeur est déterminée à partir de l'au moins datagramme (44).

4. Procédé de réglage d'au moins un paramètre de communication d'un module de communication (28) d'une station de charge (10), qui est aménagée de manière stationnaire ou respectivement fixe et conçue pour être couplée énergétiquement à des dispositifs électriques, en particulier à des véhicules automobiles à propulsion électrique, le couplage énergétique étant conçu comme un couplage énergétique par conduction, le procédé de communication servant à communiquer via une interface liée par conduction (18) de la station de charge (10),
**caractérisé en ce que** :
- un étalonneur (56) conçu comme une unité transportable et portable jusqu'à la station de charge (10) par un personnel de service, est couplé à l'interface liée par conduction (18),
- des données d'authentification sont transmises de l'étalonneur (56) au module de communication (28),
- un signal de communication du module de communication (28) est reçu et exploité par l'étalonneur (56) pour déterminer au moins un paramètre de signal en fonction du signal de communication reçu,
- l'au moins un paramètre de signal est transmis de l'étalonneur (56) au module de communication (28), et
- le module de communication (28) règle l'au moins un paramètre de communication en fonction de l'au moins un paramètre de signal et d'une exploitation des données d'authentification.

5. Procédé selon la revendication 4, **caractérisé en ce que** le signal de communication comprend au moins un datagramme (44) et **en ce que** le paramètre de signal est déterminé à partir de l'au moins datagramme (44).

6. Procédé selon l'une des revendications précédentes, **caractérisé en ce que** la valeur et/ou une modification de la valeur de l'au moins un paramètre de communication est transmise à une centrale.

7. Procédé selon l'une des revendications précédentes, **caractérisé en ce que** le réglage de l'au moins un paramètre de communication s'effectue de façon automatisée si l'étalonneur (56) est authentifié.

8. Procédé selon l'une des revendications précédentes, **caractérisé en ce que** le réglage de l'au moins un paramètre de communication est surveillé par l'étalonneur (56).

9. Procédé selon l'une des revendications précédentes, **caractérisé en ce que** le couplage de l'étalonneur (56) est verrouillé par l'interface (18).

10. Procédé selon l'une des revendications précédentes, **caractérisé en ce que** l'interface (18) est fournie au moins en partie par un câble de charge de la station de charge (10) et/ou **en ce que** l'étalonneur (56) est fourni au moins en partie par une prise de charge.

11. Procédé selon la revendication 10, **caractérisé en ce que** la communication par conduction s'effectue au moins en partie via au moins deux lignes électriques (24, 26) du câble de charge (18), au moyen desquels est également fournie au moins en partie une tension de charge de la station de charge (10), et/ou via une ligne pilote du câble de charge.

12. Étalonneur (56) pour régler au moins un paramètre de communication d'un module de communication (28) d'une station de charge (10), qui est disposée de manière stationnaire ou respectivement fixe et conçue pour être couplée énergétiquement à des dispositifs électriques, en particulier à des véhicules automobiles à propulsion électrique, le couplage énergétique étant conçu comme un couplage énergétique par conduction, l'étalonneur (56) servant à communiquer via une interface liée par conduction (18) de la station de charge (10), l'étalonneur (56) étant conçu :
- de manière transportable et portable jusqu'à la station de charge (10) par un personnel de service,
- pour être couplé à l'interface (18),
- pour transmettre des données d'authentification au module de communication (28), et
- pour transmettre une valeur pour l'au moins un paramètre de communication au module de communication (28), afin que le module de communication (28) règle l'au moins un paramètre de communication en fonction de la valeur transmise et de l'exploitation des données d'authentification par le module de communication (28).

13. Étalonneur (56) pour régler au moins un paramètre de communication d'un module de communication (28) d'une station de charge (10), qui est aménagée de manière stationnaire ou respectivement fixe et conçue pour être couplée énergétiquement à des dispositifs électriques, en particulier à des véhicules automobiles à propulsion électrique, le couplage énergétique étant conçu comme un couplage énergétique par conduction, l'étalonneur (56) servant à communiquer via une interface liée par conduction (18) de la station de charge (10), l'étalonneur (56) étant conçu :
- de manière transportable et portable jusqu'à la station de charge (10) par un personnel de service,
- pour être couplé à l'interface (18) liée par conduction,
- pour transmettre des données d'authentification au module de communication (28),
- pour recevoir et exploiter un signal de communication du module de communication (28) afin de déterminer au moins un paramètre de signal en fonction du signal de communication reçu, et
- pour transmettre l'au moins un paramètre de signal au module de communication (28), afin que le module de communication (28) règle l'au moins un paramètre de communication en fonction de l'au moins un paramètre de signal et d'une exploitation des données d'authentification.

14. Système comprenant
- un étalonneur (56) selon l'une des revendications 12 ou 13, et
- une station de charge (10) avec une connexion de charge (14, 18) pour fournir de l'énergie électrique, la station de charge (10) étant conçue aménagée de manière stationnaire ou respectivement fixe et conçue pour être couplée énergétiquement à des dispositifs électriques, en particulier à des véhicules automobiles à propulsion électrique, le couplage énergétique étant conçu comme un couplage énergétique par conduction, et avec un convertisseur d'énergie (22) commandable par une unité de commande (16) et couplé électriquement à la connexion de charge (14, 18) ainsi qu'un module de communication (28) couplé en termes de communication avec l'unité de commande (16), qui sert à communiquer via une interface liée par conduction (18) de la station de charge (10) en utilisant au moins un paramètre de communication ;
**caractérisé en ce que**
le module de communication (28) et l'étalonneur (56) sont conçus pour réaliser un procédé selon l'une des revendications 1 à 11.
